# EUROPEAN PATENT APPLICATION

(11) **EP 2 163 978 A2**
(43) Date of publication of application: **17.03.2010**
(21) Application number: 09165257.8
(22) Date of filing: 10.07.2009
(51) Int. Cl.: G06F 3/06

(54) **Method and apparatus for storage migration**

(30) Priority: 16.09.2008 US 232348
(71) Applicant: Hitachi Ltd., Chiyoda-ku Tokyo 100-8280 (JP)
(72) Inventor: Otani, Toshio, Tokyo 100-8220 (JP); Kaneda, Yasunori, Tokyo 100-8220 (JP); Yamamoto, Akira, Tokyo 100-8220 (JP)
(74) Representative: Erny, Tobias

(57) **Abstract**

Embodiments of the invention provide a method and apparatus for storage subsystem migration without re-configuration of the I/O path. In one embodiment, a computer system comprises s first storage subsystem, a second storage subsystem, and a computer device connected via a network. The first storage subsystem has a first port name for a first port through which a first volume in the first storage subsystem has I/O connection with the computer device. The second storage subsystem defies a first virtual volume which is associated with the first volume, and a first virtual port having a first virtual port name that is identical to the first port name, After activation of the first virtual port, the computer device switches I/O connection for the first volume from the first storage subsystem to the second storage subsystem via the network using the first virtual port name on the second storage subsystem.

## Description

### BACKGROUND OF THE INVENTION

The present invention relates generally to storage system and, more particularly, to storage migration, especially migration involving storage virtualization.

The amount of digital data is growing rapidly. The use of a storage area network (SAN) connecting one or more host computers with one or more storage subsystems is one way to store digital data in the storage subsystems and allow access from the host computers. As technology advances and storage devices age, the storage subsystems will need to be replaced. To replace the storage subsystems, the storage administrator will need to perform several operations such as data migration, re-configuration (I/O path, security, LUN setting, etc.), and so forth.

Today, Fibre Channel (FC) is the most popular protocol for SAN. FC uses WWN (World Wide Name) to identify each node on the SAN (host computer, storage subsystem). Each node has an HBA (Host Bus Adapter) connected to the SAN, and each HBA has a unique WWPN (World Wide Port Name).

The connection between a host computer and a storage subsystem is established by using each WWPN. The host computer also uses WWPN to identify each storage subsystem to which host computer wants to connect. Changing the WWPN of the storage subsystem requires the re-configuration of each host computer and/or FC-SW zoning.

Current solutions are based on the environment that the WWPN on (HBA of) the storage subsystem is static. Each (physical) HBA has a unique, single, and embedded WWPN which cannot be changed. It requires the host computer to re-configure the I/O path to the storage subsystem when replacement of the storage subsystem occurs.

### BRIEF SUMMARY OF THE INVENTION

Embodiments of the invention provide a method and apparatus for storage subsystem migration without re-configuration of the I/O path. The invention is particularly useful for the migration of a storage subsystem that defines a virtual WWPN of other storage subsystems or ports for its Fibre Channel target port. It allows the host computer to switch I/O path without re-configuration.

In accordance with an aspect of the present invention, a computer system comprises a first storage subsystem, a second storage subsystem, and a computer device which are connected via a network. The first storage subsystem has a first port name for a first port through which a first volume in the first storage subsystem has I/O connection with the computer device, the first port name being a unique port name. The second storage subsystem defines a first virtual volume which is associated with the first volume in the first storage subsystem, and a first virtual port associated with the first virtual volume, the first virtual port having a first virtual port name that is identical to the first port name of the first port in the first storage subsystem. The second storage subsystem is configured to activate the first virtual port associated with the first virtual volume to register the first virtual port to the network. The computer device is configured, after activation of the first virtual port, to switch I/O connection for the first volume from the first storage subsystem to the second storage subsystem via the network using the first virtual port name on the second storage subsystem.

In some embodiments, the second storage subsystem executes data migration for the first volume after the computer device switches I/O connection for the first volume from the first storage subsystem to the second storage subsystem.

In some embodiments, the first storage subsystem has a second port name for a second port through which a second volume in the first storage subsystem has I/O connection with the computer device via an additional network, the second port name being another unique port name. The second storage subsystem defines a second virtual volume which is associated with the second volume in the first storage subsystem, and a second virtual port associated with the second virtual volume, the second virtual port having a second virtual port name that is identical to the second port name of the second port in the first storage subsystem. The second storage subsystem is configured to activate the second virtual port associated with the second virtual volume to register the second virtual port to the additional network: The computer device is configured, after activation of the first virtual port, to switch I/O connection for the second volume from the first storage subsystem to the second storage subsystem via the additional network using the second virtual port name on the second storage subsystem. This represents a two-path system. More paths can be added to provide other multi-path configurations having more than two paths.

In specific embodiments, the second storage subsystem is configured to define a first initiator port to connect the first virtual volume to the first volume in the first storage subsystem, the first initiator port having a virtual port name that is identical to a port name of a port in the computer device which is connected to the network for I/O with the first volume in the first storage subsystem. Additional initiator ports may be provided in alternate embodiments.

In some embodiments, the computer device is configured, prior to activation of the first virtual port associated with the first virtual volume of the second storage subsystem, to suspend I/O with the first storage subsystem. The second storage subsystem receives a first N_Port ID for the first virtual port name after activation of the first virtual port.

In specific embodiments, the first storage subsystem has a first additional port with a first additional port name through which the first volume in the first storage subsystem has I/O connection with the first virtual volume of the second storage subsystem. At this time, the first storage subsystem has I/O connection for the first volume in the first storage subsystem with the computer device using the first port in the first storage subsystem. After activation of the first virtual port associated with the first virtual volume of the second storage subsystem, the computer device receives from the network an RSCN (Registered State Change Notification) and a first N_Port ID for the first virtual port name associated with the first virtual volume of the second storage subsystem, and switches I/O for the first volume from the first storage subsystem to the second storage subsystem. After the computer device receives from the network the RSCN, the computer device logs out from the first storage subsystem.

In accordance with another aspect of the invention, a computer system comprises a first storage subsystem, a second storage subsystem, a third storage subsystem, and a computer device which are connected via a network. The first storage subsystem has a first port name for a first port through which a first volume in the first storage subsystem has I/O connection with the computer device, the first port name being a unique port name. The second storage subsystem (SS2) includes a first SS2 virtual volume which is associated with the first volume in the first storage subsystem, and a first SS2 port having a first SS2 port name for I/O connection of the first SS2 virtual volume with the computer device via the network. The third storage subsystem (SS3) defines a first SS3 virtual volume which is associated with the first volume in the first storage subsystem, and a first SS3 virtual port associated with the first SS3 virtual volume, the first SS3 virtual port having a first SS3 virtual port name that is identical to the first SS2 port name of the first SS2 virtual port in the second storage subsystem. The third storage subsystem is configured to activate the first SS3 virtual port associated with the first SS3 virtual volume to register the first SS3 virtual port to the network. The computer device is configured, after activation of the first SS3 virtual port, to switch I/O connection for the first volume from the second storage subsystem to the third storage subsystem via the network using the first SS3 virtual port name on the third storage subsystem.

In some embodiments, the third storage subsystem executes data migration for the first volume after the computer device switches I/O connection for the first volume from the second storage subsystem to the third storage subsystem.

In some embodiments, the first storage subsystem has a second port name for a second port through which a second volume in the first storage subsystem has I/O connection with the computer device via an additional network, the second port name being another unique port name. The second storage subsystem (SS2) includes a second SS2 virtual volume which is associated with the second volume in the first storage subsystem, and a second SS2 port having a second SS2 port name for I/O connection of the second SS2 virtual volume with the computer device via the additional network. The third storage subsystem (SS3) defines a second SS3 virtual volume which is associated with the second volume in the first storage subsystem, and a second SS3 virtual port associated with the second SS3 virtual volume, the second SS3 virtual port having a second SS3 virtual port name that is identical to the second SS2 port name of the second SS2 virtual port in the second storage subsystem. The third storage subsystem is configured to activate the second SS3 virtual port associated with the second SS3 virtual volume to register the second SS3 virtual port to the additional network. The computer device is configured, after activation of the first SS3 virtual port, to switch I/O connection for the second volume from the second storage subsystem to the third storage subsystem via the network using the second SS3 virtual port name on the third storage subsystem. This represents a two-path system. More paths can be added to provide other multi-path configurations having more than two paths.

In specific embodiments, the second storage subsystem (SS2) includes an additional first SS2 port having an additional first SS2 port name for I/O connection of the first SS2 virtual volume with the first storage subsystem. The third storage subsystem is configured to define a first SS3 initiator port to connect the first SS3 virtual volume to the first volume in the first storage subsystem, the first SS3 initiator port having a virtual port name that is identical to the additional first SS2 port name of the additional first SS2 port in the second storage subsystems. Additional initiator ports may be provided in alternate embodiments.

In some embodiments, the computer device is configured, prior to activation of the first SS3 virtual port associated with the first SS3 virtual volume of the third storage subsystem, to suspend I/O with the first storage subsystem. The third storage subsystem receives a first SS3 N_Port ID for the first SS3 victual port name after activation of the first SS3 virtual port.

In specific embodiments, the first storage subsystem has a first additional port with a first additional port name through which the first volume in the first storage subsystem has I/O connection with the first SS3 virtual volume of the third storage subsystem. At this time, the first storage subsystem has I/O connection for the first volume in the first storage subsystem with the computer device using the first port in the first storage subsystem. After activation of the first SS3 virtual port associated with the first SS3 virtual volume of the third storage subsystem, the computer device receives from the network an RSCN (Registered State Change Notification) and a first N_Port ID for the first SS3 virtual port name associated with the first SS3 virtual volume of the third storage subsystem, and switches I/O for the first volume from the first storage subsystem to the third storage subsystem.

Another aspect of the invention is directed to a computer system which includes a first storage subsystem, a second storage subsystem, and a computer device that are connected via a network; wherein the first storage subsystem has a first port name for a first port through which a first volume in the first storage subsystem has I/O connection with the computer device, the first port name being a unique port name. A method for storage subsystem migration without re-configuration of the I/O path comprises defining in the second storage subsystem a first virtual volume which is associated with the first volume in the first storage subsystem, and a first virtual port associated with the first virtual volume, the first virtual port having a first virtual port name that is identical to the first port name of the first port in the first storage subsystem; activating the first virtual port associated with the first virtual volume of the second storage subsystem to register the first virtual port to the network; and, after activation of the first virtual port, switching I/O connection of the computer device for the first volume from the first storage subsystem to the second storage subsystem via the network using the first virtual port name on the second storage subsystem.

Another aspect of the invention is directed to a computer system which includes a first storage subsystem, a second storage subsystem, a third storage subsystem, and a computer device that are connected via a network; wherein the first storage subsystem has a first port name for a first port through which a first volume in the first storage subsystem has I/O connection with the computer device, the first port name being a unique port name; and wherein the second storage subsystem (SS2) includes a first SS2 virtual volume which is associated with the first volume in the first storage subsystem, and a first SS2 port having a first SS2 port name for lick connection of the first SS2 virtual volume with the computer device via the network. A method for storage subsystem migration without re-configuration of the I/O path comprises defining in the third storage subsystem (SS3) a first SS3 virtual volume which is associated with the first volume in the first storage subsystem, and a first SS3 virtual port associated with the first SS3 virtual volume, the first SS3 virtual port having a first SS3 virtual port name that is identical to the first SS2 port name of the first SS2 virtual port in the second storage subsystem; activating the first SS3 virtual port associated with the first SS3 virtual volume of the third storage subsystem to register the first SS3 virtual port to the network; and, after activation of the first SS3 virtual port, switch I/O connection of the computer device for the first volume from the second storage subsystem to the third storage subsystem via the network using the first SS3 virtual port name on the third storage subsystem.

These and other features and advantages of the present invention will become apparent to those of ordinary skill in the art in view of the following detailed description of the specific embodiments.

### BRIEF DESCRIPTION OF THE DRAWINGS

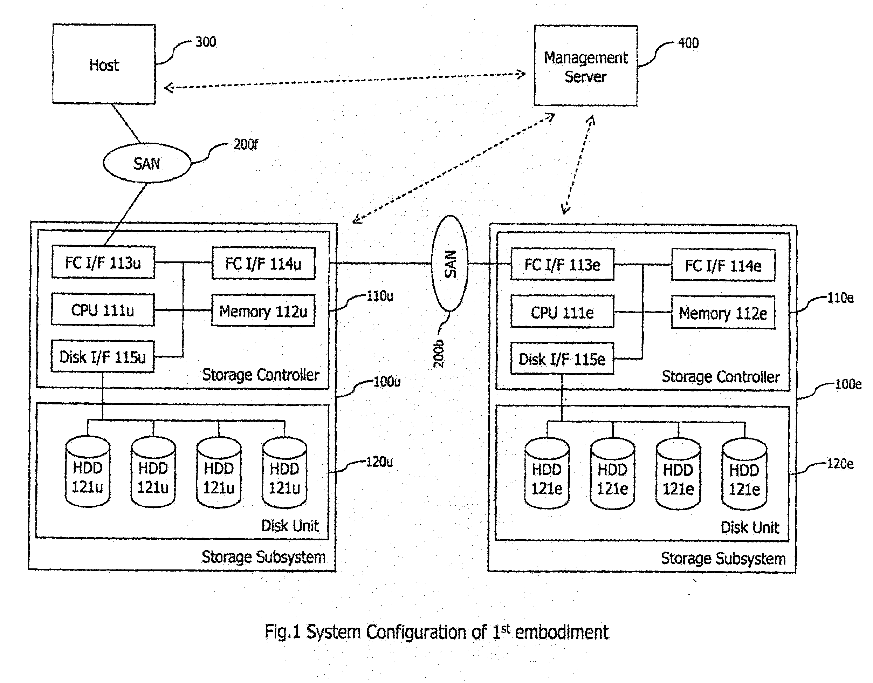

FIG. 1 illustrates an example of a hardware configuration in which the method and apparatus of the invention may be applied.

FIG. 2 shows a software module configuration of the memory in the second storage subsystem of FIG. 1.

FIG. 3 shows an example of the logical volume management table.

FIG. 4 shows an example of the host path management table.

FIG. 5 shows an example of the external storage management table

FIG. 6 shows a software module configuration of the memory in the first storage subsystem of FIG. 1.

FIG. 7 shows an exemplary configuration of the host computer of FIG. 1.

FIG. 8 shows an exemplary configuration of the management server of FIG. 1.

FIGS. 9a-9e illustrate an example of the migration process using NPIV and explicit I/O suspension, in which FIG. 9a shows the first status, FIG. 9b shows the second status, and FIG. 9c shows the third status of the migration process, and FIGS. 9d and 9e show another set of statuses of the migration process.

FIG. 10 shows an example of the process flow of migration control in the migration process.

FIG. 11 shows an example of the process flow of external storage control for initiator and virtual WWPN configuration in the migration process.

FIG. 12 shows an example of the process flow for external storage control for initiator and virtual WWPN activation in the migration process.

FIG. 13 shows an example of the process flow for FCP control in the migration process.

FIGS. 14a-14c illustrate an example of the migration process using NPIV and explicit I/O suspension with multiple I/O paths between the host computer and the storage subsystems, in which FIGS. 14a shows the first status, FIG. 14b shows the second status, and FIG. 14c shows the third status of the migration process.

FIG. 15 shows an example of the process flow of the migration process using NPIV and explicit I/O suspension with multiple I/O paths.

FIGS. 16a-16c illustrate an example of the migration process using NPIV and RSCN (Registered State Change Notification), in which FIG. 16a shows the first status, FIG. 16b shows the second status, and FIG. 16c shows the third status of the migration process.

FIG. 17 shows an example of the process flow of migration control in the migration process.

FIG. 18 shows an example of the process flow of logical volume I/O control in the migration process.

FIG. 19 shows an example of the process flow of FCP control in the migration process.

FIGS. 20a-20d illustrate an example of the migration process using NPIV and RSCN with multiple I/O paths between the host computer and the storage subsystems, in which FIG. 20a shows the first status, FIG. 20b shows the second status, FIG. 20c shows the third status, and FIG. 20d shows the fourth status of the migration process.

FIG. 21 shows an example of the process flow of the migration process using NPIV and RSCN with multiple I/O paths.

FIGS. 22a-e illustrate an example of the migration process using NPIV and explicit I/O suspension in the storage visualization environment, in which FIG. 22a shows the first status, FIG. 22b shows the second status, and FIG. 22c shows the third status of the migration process, and FIGS. 22d and 22e show another set of statuses of the migration process.

FIG. 23 shows an example of the process flow of the migration process using NPIV and explicit I/O suspension in the storage virtualization environment.

FIGS. 24a-24c illustrate an example of the migration process using NPIV and explicit I/O suspension with multiple I/O paths between the host computer and the storage subsystems in the storage virtualization environment, in which FIG. 24a shows the first status, FIG. 24b shows the second status, and FIG. 24c shows the third status of the migration process.

FIG. 25 shows an example of the process flow of the migration process using NPIV and explicit I/O suspension in the storage virtualization environment with multiple I/O paths.

FIGS. 26a-26c illustrate an example of the migration process using NPIV and RSCN in the storage virtualization environment, in which FIG. 26a shows the first status, FIG. 26b shows the second status, and FIG. 26c shows the third status of the migration process.

FIG. 27 shows an example of the process flow of the migration process using NPIV and RSCN in the storage virtualization environment.

FIGS. 28a-28d illustrate an example of the migration process using NPIV and RSCN with multiple I/O paths between the host computer and the storage subsystems in the storage virtualization environment, in which FIG. 28a shows the first status, FIG. 28b shows the second status, FIG. 28c shows the third status, and FIG. 28d shows the fourth status of the migration process.

FIG. 29 shows an example of the process flow of the migration process using NPIV and RSCN with multiple I/O paths in the storage virtualization environment.

FIG. 30 illustrates an example of the migration process using NPIV and explicit I/O suspension for Fibre Channel over Ethernet (FCoE) using FLoE Forwarder (FCF).

FIG. 31 illustrates an example of the migration process using NPIV and explicit I/O suspension for a native FCoE storage system.

### DETAILED DESCRIPTION OF THE INVENTION

In the following detailed description of the invention, reference is made to the accompanying drawings which form a part of the disclosure, and in which are shown by way of illustration, and not of limitation, exemplary embodiments by which the invention may be practiced. In the drawings, like numerals describe substantially similar components throughout the several views. Further, it should be noted that while the detailed description provides various exemplary embodiment, as described below and as illustrated in the drawings, the present invention is not limited to the embodiments described and illustrated herein, but can extend to other embodiments, as would be known or as would become known to those skilled in the art. Reference in the specification to "one embodiment", "this embodiment", or "these embodiments" means that a particular feature, structure, or characteristic described in connection with the embodiment is included in at least one embodiment of the invention, and the appearances of these phrases in various places in the specification are not necessarily all referring to the same embodiment. Additional, in the following detailed description, numerous specific details are set forth in order to provide a thorough understanding of the present invention. However, it will be apparent to one of ordinary skill in the art that these specific details may not all be needed to practice the present invention. In other circumstances, well-known structures, materials, circuits, processes and interfaces have not been described in detail, and/or may be illustrated in block diagram form, so as to not unnecessarily obscure the present invention.

Embodiments of the invention, as will be described in greater detail below, provide apparatuses, methods and computer programs for storage subsystem migration without re-configuration of the I/O path.

1. System Structure

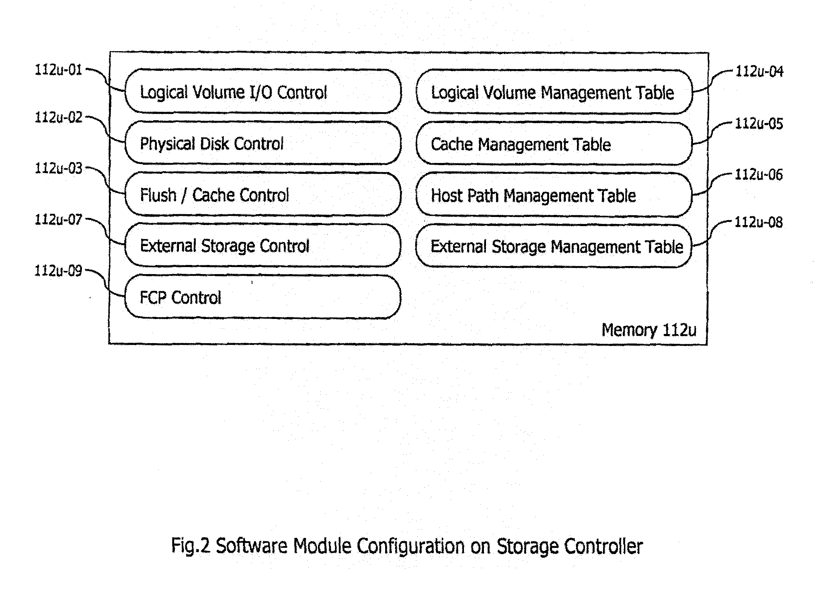

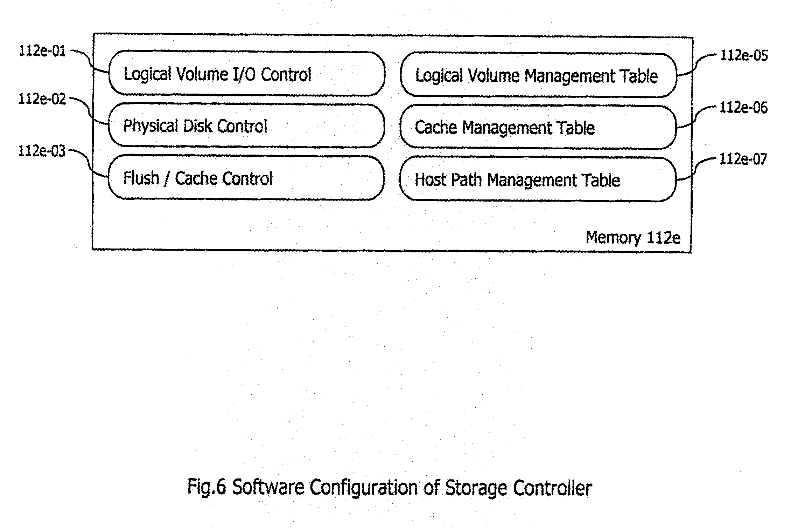

FIG. illustrates an example of a hardware configuration in which the method and apparatus of the invention may be applied. The system includes first and second storage subsystems 100e and 100u which are connected via networks such as storage area networks (SAN) 200f, 200b to a host computer 300 and a management server 400. The storage subsystems 100e and 100u each have a storage controller 110 and a disk unit 120. The storage controller 110 performs disk I/O functionality with the host computer 300 using Fibre Channel Protocol via the SAN 200f. The disk unit 120 has a plurality of hard disk drives (HDDs). The storage controller 110 combines these HDDs and configures RAID (Redundant Arrays of Inexpensive Disks), and then provides volume (LU: logical unit) to the host computer 300. These functions are executed by application programs shown in FIG. 2 and FIG. 6.

FIG. 2 shows a software module configuration of the memory 112u in the second storage subsystem 100u, and it includes logical volume I/O control 112u-01, physical disk control 112u-02. flush/cache control 112u-03, external storage control 112u-07, FCP (Fibre Channel Protocol) control 11 2u-09, logical volume management table 112u-04, cache management table 112u-05, host path management table 112u-06, and external storage management table 112u-08. FIG. 6 shows a software module configuration of the memory 112e in the first storage subsystem 100e, and it includes logical volume I/O control 112e-01, physical disk control 112e-02, flush/cache control 112e-03, logical volume management table 112e-05, cache management table 112e-06, and host path management table 112e-07.

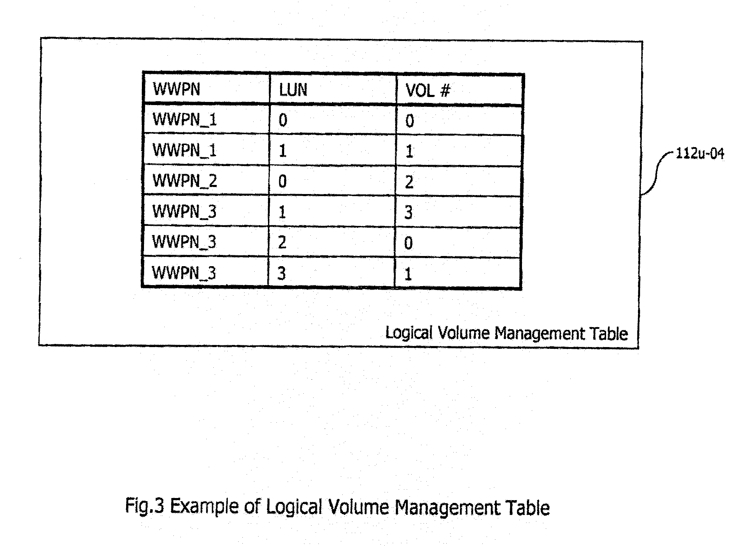

FIG. 3 shows an example of the logical volume management table 112u-04. The "WWPN" field represents the WWPN of HBA on the second storage subsystem 100u. The "LUN" field represents the LU Number on the storage subsystem. The "VOL #" field represents the volume on the storage subsystem. As seen in FIG. 3, when the host computer 300 accesses VVWPN_1, it can connect to LUN 0 and LUN 1.

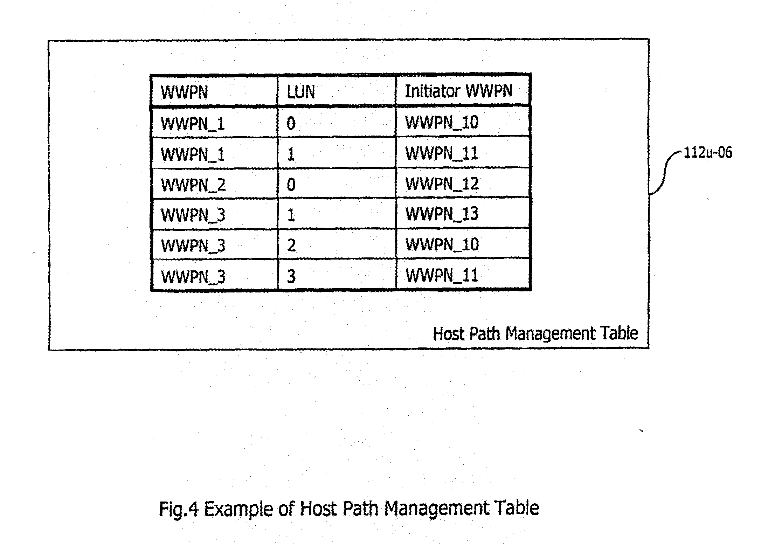

FIG. 4 shows an example of the host path management table 112u-06. It allows the second storage subsystem 100u to restrict access to the LU using the WWPN of the host (initiator WWPN) to achieve LUN Security.

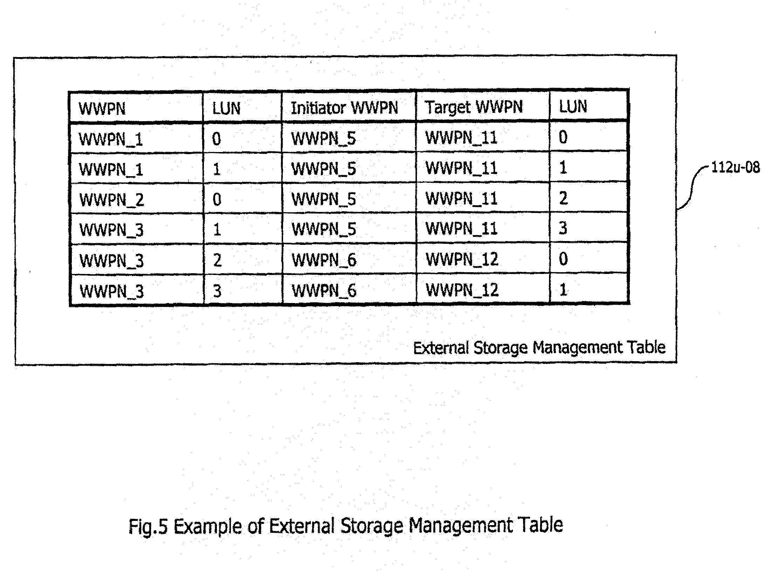

FIG. 5 shows an example of the external storage management table 112u-08. External storage involves the storage virtualization technology. Storage subsystems A and B are connected to each other.
When the host computer connects to the virtual LU on storage subsystem A, it can reach the LU on storage subsystem B by connecting the virtual LU on storage subsystem A and the LU on storage subsystem F3. The "WWPN" field represents the WWPN of HBA on storage subsystem A. The "LUN" field represents the (virtual) LUN on storage subsystem A. The "Initiator WWPN" field represents the initiator WWPN of HBA on storage subsystem A in order to connect to storage subsystem B. The "Target WWPN" field represents the WWPN of HBA on storage subsystem B. The last "LUN" field represents the LUN on storage subsystem B associated virtual LUN on Storage Subsystem A.

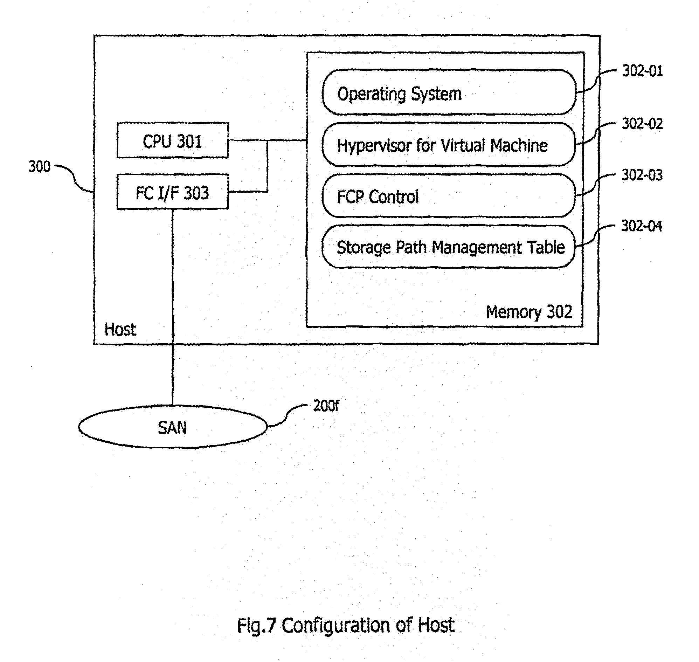

Fig. 7 shows an exemplary configuration of the host computer 300. The host computer 300 connects to the SAN 200f via an FC I/F 303, and has I/O connections to the storage subsystems 100e and 100u. It has a CPU 301 and a memory 302. In the embodiment shown, the memory 302 stores the operating system 302-01, hypervisor for virtual machine 302-02, FCP control 302-03, and storage path management table 302-04. The host computer can be either a physical host or a virtual host such as a virtual machine.

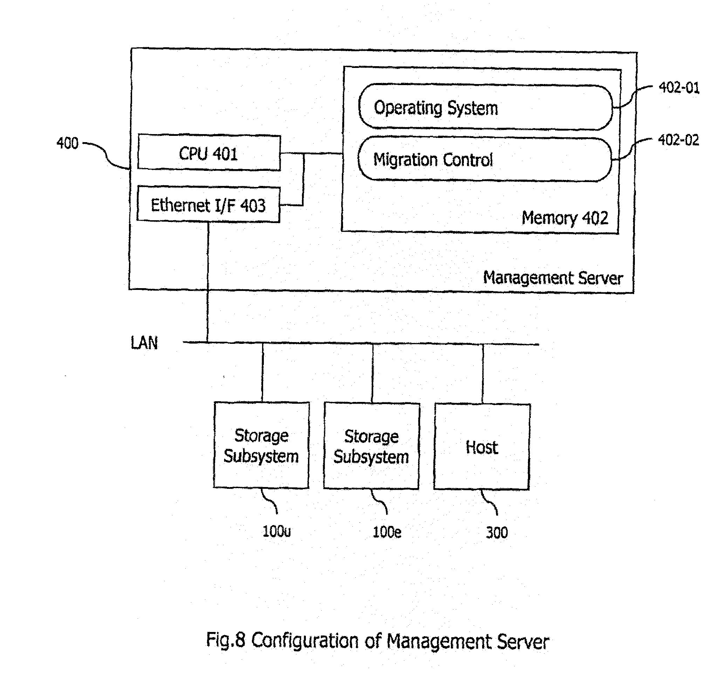

FIG. 8 shows an exemplary configuration of the management server 400. The management server 400 connects to the storage subsystems 100e, 100u and the host computer 300 via an Ethernet I/F 403 and a network LAN. The management server 400 controls the storage subsystems 100e, 100u and the host computer 300 to carry out the migration process. It has a CPU 401 and a memory 402 which stores an operating system 402-01 and migration control 402-02.

2. Migration Using NPIV and Explicit I/O Suspension

FUGS. 9a-9e illustrate an example of the migration process using NPIV and explicit I/O suspension. NPIV stands for N_Port ID Virtualization. It allows the HBA to have a virtual WWPN. This embodiment applies NPIV to the storage subsystem for migration without re-configuration of the I/O path.

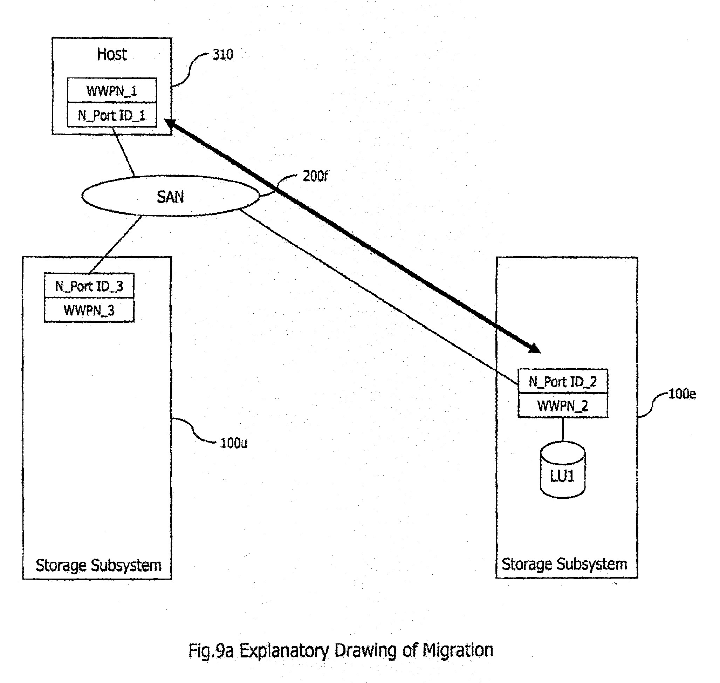

FIG. 9a shows the first status of the migration process. The host computer 310 (which can be a physical host or a virtual host) connects to the first storage subsystem 100e using Fibre Channel via the SAN 200F. The host computer 310 has WWPN_1. N_Port ID_1 connected to the SAN 200f. The first storage subsystem has WWPN_2, N_Port ID_2 which is connected to LU1 and to the SAN 200f. The second storage subsystem has WWPN_3, N__Port ID_3 connected to the SAN 200f.

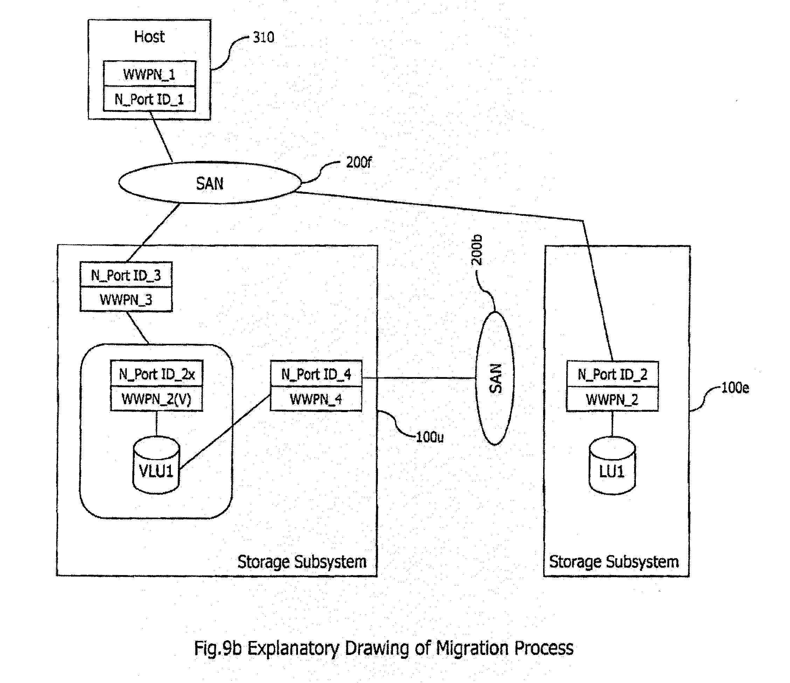

FIG. 9b shows the second status of the migration process. The second storage subsystem 100u defines a virtual WWPN for VLU1 (WWPN_2(V)), where the virtual WWPN is the same as the (physical) WWPN of the first storage subsystem 100e (WWPN_2). The second storage subsystem 100u further defines an initiator port (WWPN_4. N_Port ID_4 which is connected to the SAN 200b) to connect to LU1 on the first storage subsystem 100e using the storage virtualization function. Examples of the storage virtualization function can be found in U.S. Patent Nos. 7,003,634 and 7,228,380. Next, the host computer 310 suspends I/O with the first storage subsystem 100e. Then the second storage subsystem 100u activates the virtual WWPN and the initiator port. This allows the second storage subsystem 100u to send an FDISC message to the SAN 200f in order to get a new N_Port ID for the virtual WWPN (WWPN_2(V), N_Port ID_2x)

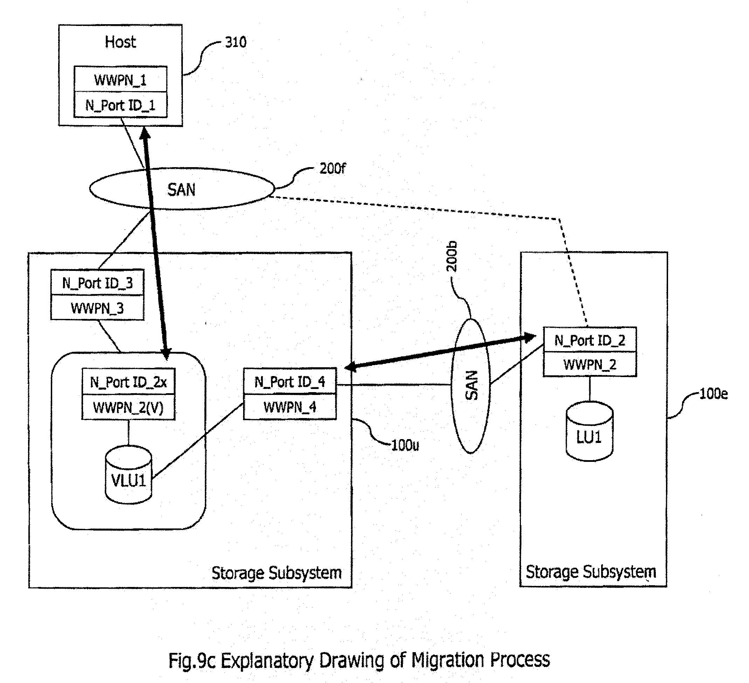

FIG. 9c shows the final status of the migration process. The first storage subsystem 100e disables WWPN_2 and updates the SNS (Simple Name Server) database of the SAN 200b (WWPN_2 of the first storage subsystem 100e will be deleted). Next, the host computer 310 resumes I/O using the same WWPN as before (WWPN_2). This time WWPN_2 is owned by the second storage subsystem 100u. This process allows the host computer 310 to switch I/O from the old Storage Subsystem 100e to the new storage subsystem 100u.

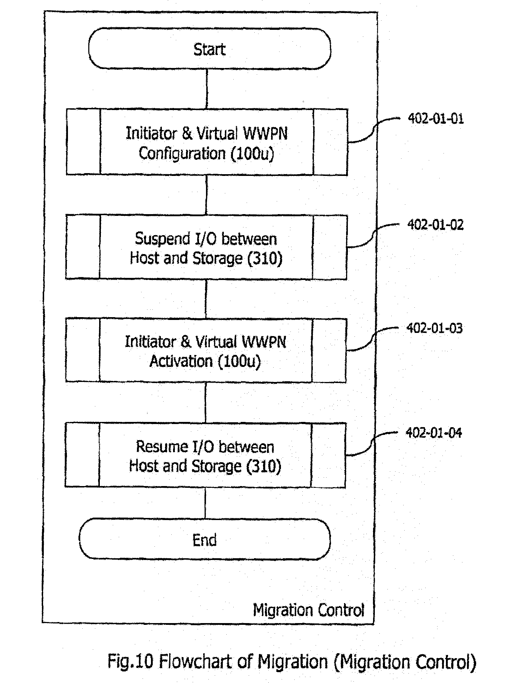

FIGS. 10, 11, 12 and 13 show flowcharts of this migration process as executed by the management server 400, the storage subsystems 100e, 100u, and the host computer 310, for instance.

In FIG. 10, migration control is performed by initiator and virtual WWPN configuration in the second storage subsystem 100u (402-01-01), suspending I/O between the host computer 310 and the first storage subsystem 100e (402-01-02), initiator and virtual WWPN activation in the second storage subsystem 100u (402-01-03), and resuming I/O between the host computer 310 and the second storage subsystem 100u (402-01-04).

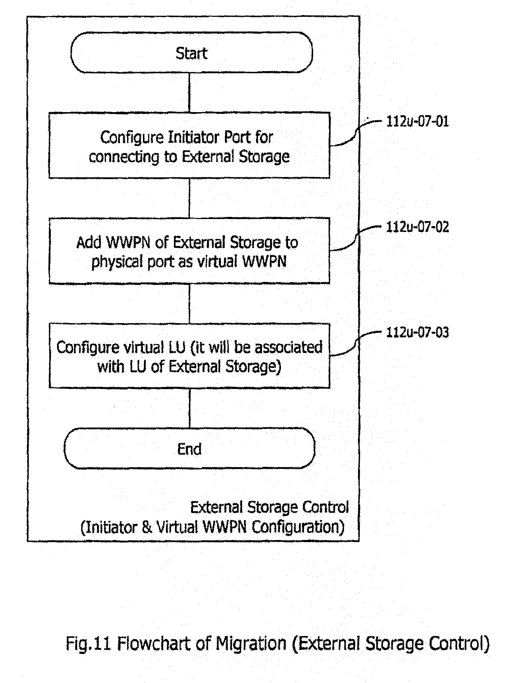

In FIG. 11, external storage control for the migration process involves configuring initiator port in the second storage subsystem 100u for connecting to external storage 100e (112u-07-01), adding WWPM of the external storage 100e to the physical port as virtual WWPN in the second storage subsystem 100u, and configuring a virtual LU in the second storage subsystem 100u (which will be associated with the LU of the external storage 100e).

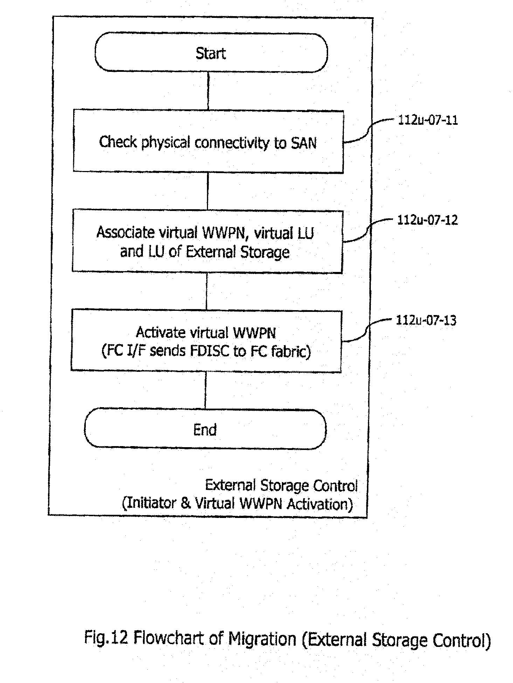

In FIG. 12, external storage control for migration involves initiator and virtual WWPN activation. The process includes checking the physical connectivity to the SAN by the second storage subsystem 100u (112u-07-11), associating the virtual WWPN of the virtual LU of the second storage subsystem 100u with the LU of the external storage 100e (112u-07-12), and activating the virtual WWPN in the second storage subsystem 100u by sending via the FC IF 113u an FDISC message to the FC fabric (112u-07) 13).

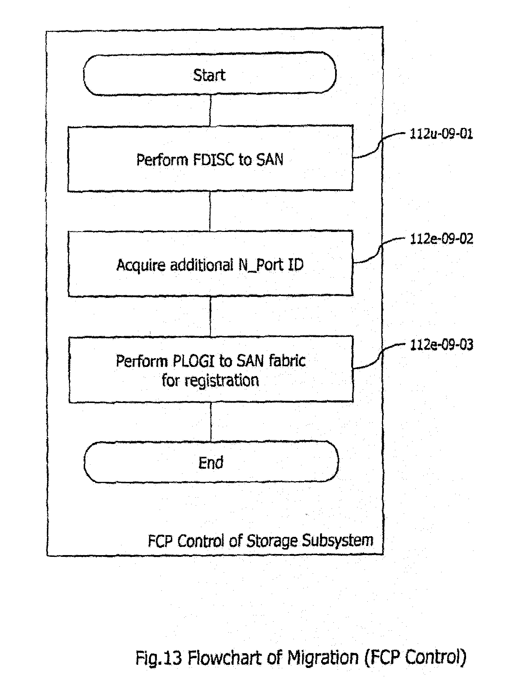

In FIG. 13, FCP control for the migration process involves performing FDISC to the SAN (112u-09-01), acquiring additional N_Port ID (112e-09-02), and performing PLOGI to the SAN fabric for registration (112e-09-03).

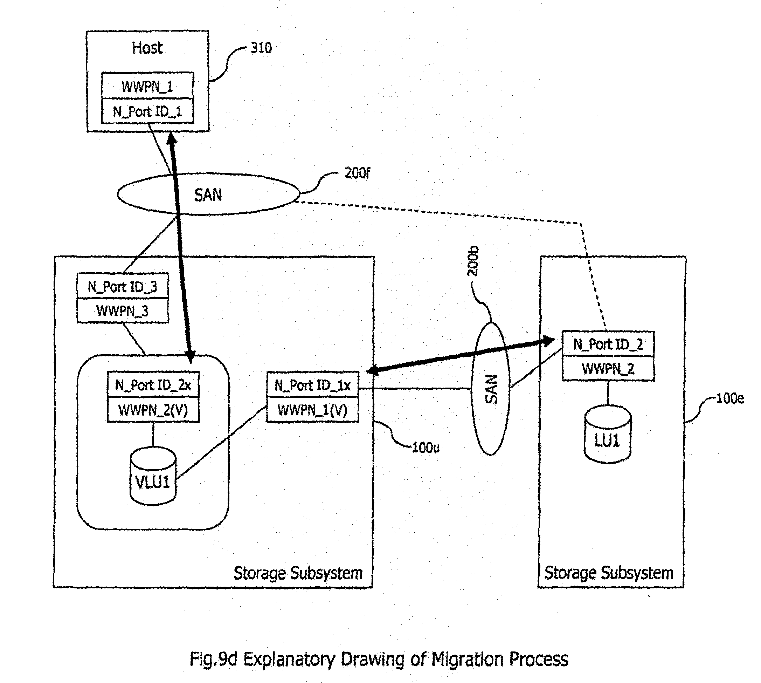

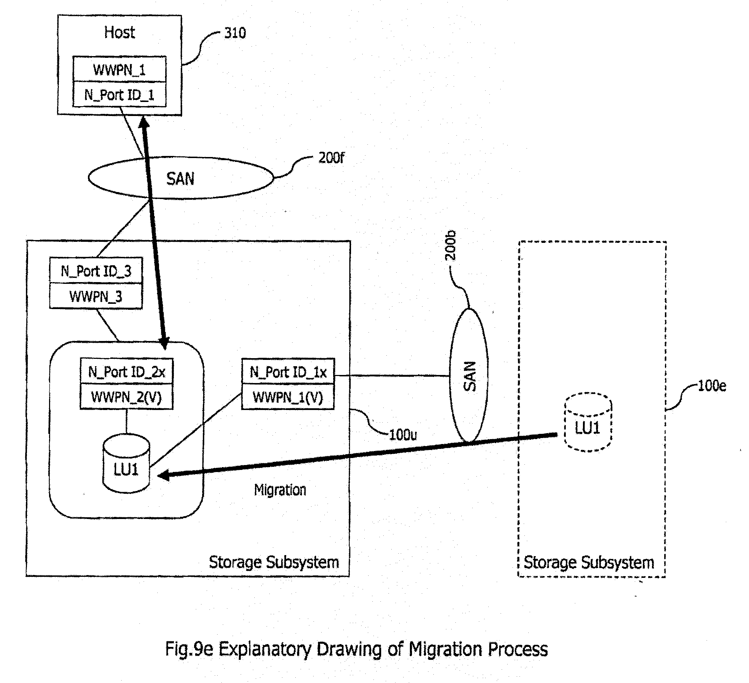

FIGS. 9d and 9e show another set of statuses of the migration process of FIGS. 9a-9c. In FIG. 9d, the second storage subsystem 100u defines the same virtual WWPN as the host computer 310 in its initiator port (WWPN_1 (V)). This allows the first storage subsystem 100e not to reconfigure the LUN masking, as compared to the status of FIG. 9c. In FIG. 9e, after adoption of the second storage subsystem 100u, the data of LU1 in the first storage subsystem 100e can be migrated to LU1 of the second storage subsystem 100u. This allows the first storage subsystem 100e to be taken away.

This embodiment of the invention is not limited to storage subsystem migration only but can also be used for port migration (e.g., migrating I/O from port-A to port-B on a storage subsystem).

3. Migration Using NPIV and Explicit I/O Suspension, Multiple Paths

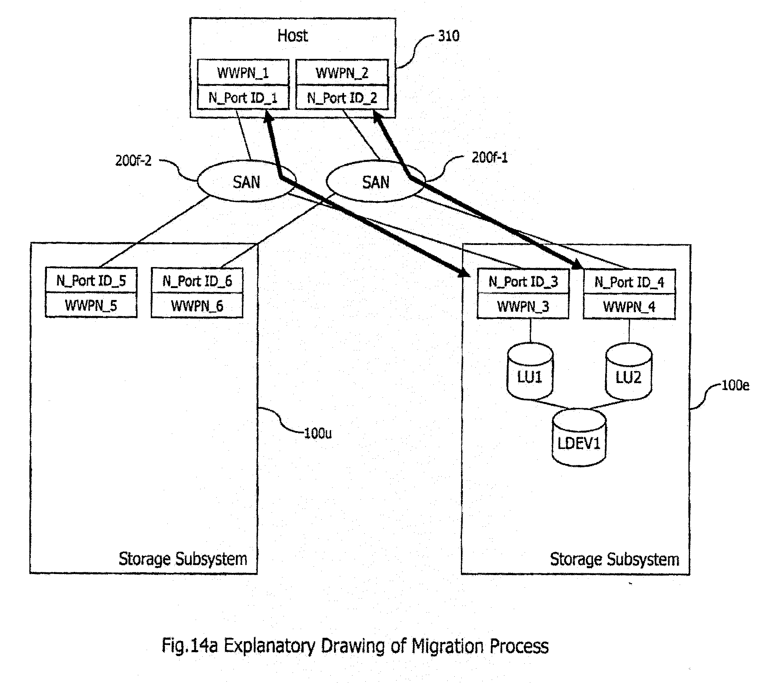

FIGS. 14a-14c illustrate an example of the migration process using NPIV and explicit I/O suspension with multiple I/O paths between the host computer 310 and the storage subsystems 100e, 100u.

FIG. 14a shows the first status of the migration process. The host computer 310 has multiple I/O paths to the first storage subsystem 100e via the SAN 200f-1 and SAN 200f-2 (this example shows path-A and path-B). The host computer 310 has WWPN_1, N_Port ID_1 connected to the SAN 200f-2, and WWPN_2, N_Port ID_2 connected to the SAN 200f-1. The first storage subsystem 100e has WWPN_3, N_Port ID_3 connected to the SAN 200f-2, and WWPN_4, N_Port ID_4 connected to the SAN 200f-1. The second storage subsystem 100u has WWPN_5, N_Port ID_5 connected to the SAN 200f-2, and WWPN_6, N_Port lD_6 connected to the SAN 200f-1. In the first storage subsystem 100e, LDEV1 means a volume which can be accessed from multiple LUs. This technology is used to perform multiple I/O paths.

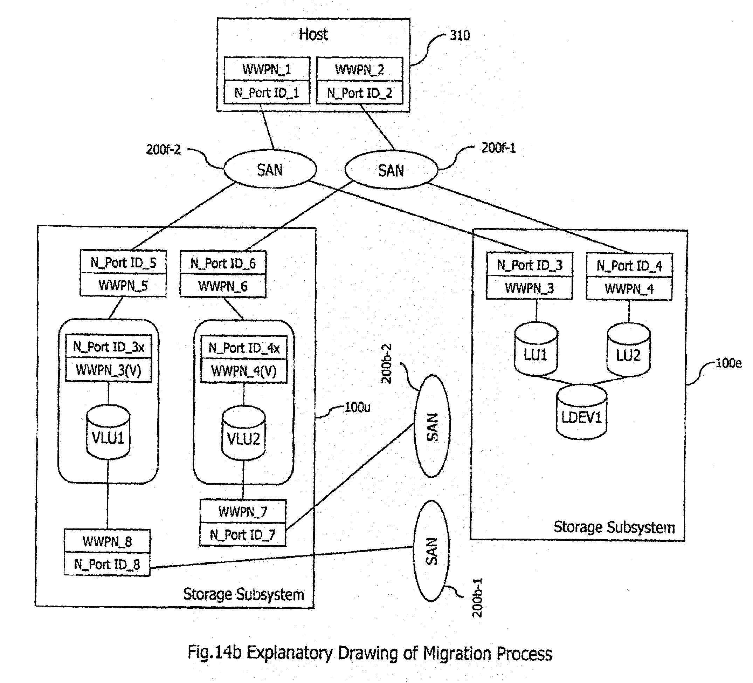

FIG. 14b shows the second status of the migration process. The second storage subsystem 100u defines multiple virtual WWPN and initiators for the multiple paths. The second storage subsystem 100u has WWPN_3(V), N_Port ID_3x for VLU1 with an initiator WWPN_8. N_Port ID_8 which is connected to the SAN 200b-1, and has WWPN_4(V), N_Port ID_4x for VLU2 with an initiator WWPN_7, N_Port ID_7 which is connected to the SAN 200b-2. The host computer 310 suspends the I/O paths (path-A and path-B) with the first storage subsystem 100e.

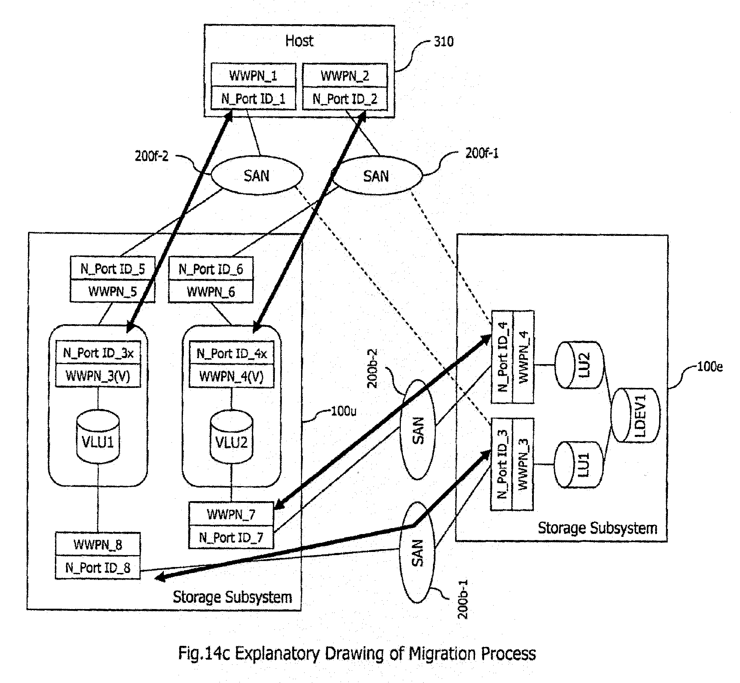

FIG. 14c shows the final status of the migration process. The second storage subsystem 100u activates its virtual WWPNs and connects to the first storage subsystem 100e by the storage virtualization function via the SAN 200b-1 and SAN 200b-2. Next, the host computer 310 resumes multiple I/O paths using the same WWPNs, which are now owned by the second storage subsystem 100u.

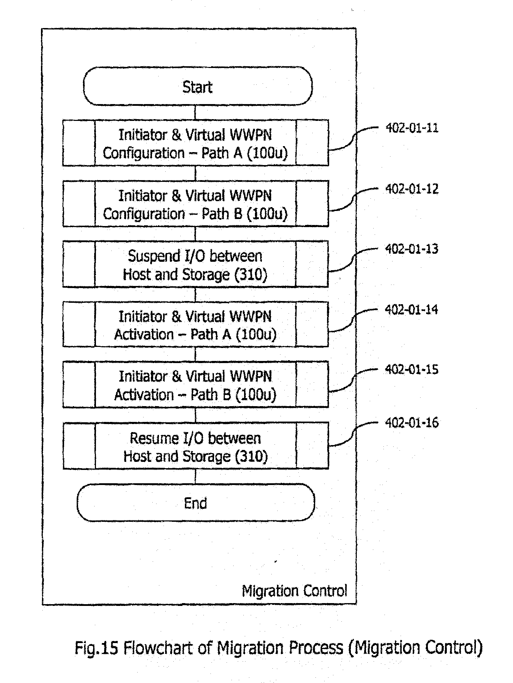

FIG. 15 shows an example of the process flow of the migration process using NPIV and explicit I/O suspension with multiple I/O paths. The process involves initiator and virtual WWPN configuration in the second storage subsystem 100u for path A (402-01-11) and for path B (402-01-12), suspending I/O between the host computer 310 and the first storage subsystem 100e (402-01-13), initiator and virtual WWPN activation in the second storage subsystem 100u for path A (402-01-14) and for path B (402-01-15), and resuming I/O between the host computer 310 and the second storage subsystem 100u (402-01-16).

4. Migration Using NPIV and RSCN

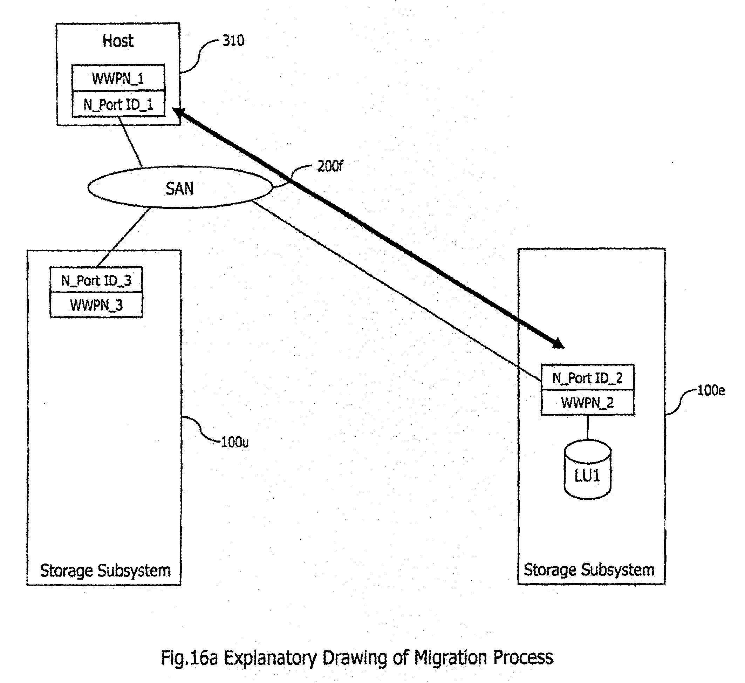

FIGS. 16a-16c illustrate an example of the migration process using NPIV and RSCN. RSCN stands for Registered State Change Notification. It sends notification to Fibre Channel nodes in the SAN fabric when the fabric SNS database is changed (e.g., adding or removing a disk (target device), creating a new zone). This embodiment applies RSCN and NPIV to the storage subsystem for migration without re-configuration of the I/O path.

FIG. 16a shows the first status of the migration process. The host computer 310 connects to the first storage subsystem 100e using Fibre Channel via the SAN 200f. The host computer 310 has WWPN_1, N_Port 1D_1 connected to the SAN 200f. The first storage subsystem 100e has WWPN_2, N_Port ID_2 connected to the SAN 200f. The second storage subsystem 100u has WWPN_3, N_Port ID_3 connected to the SAN 200f.

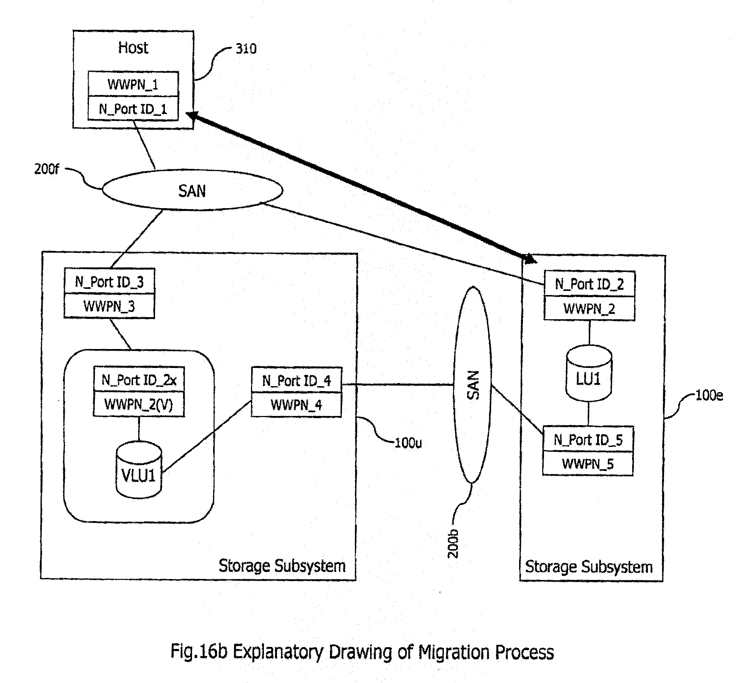

FIG. 16b shows the second status of the migration process.
The second storage subsystem 100u defines a virtual WWPN which is the same as the (physical) WWPN of the first storage subsystem 100e (WWPN_2(V)). It further defines an initiator port (WWPN_4, N_Port ID_4) to connect to LU1 on the first storage subsystem 100e using the storage virtualization function via the SAN 200b. To do so, the first storage subsystem 100e defines another WWPN (WWPN_5) which is connected to LU1. Next, the second storage subsystem 100u activates the virtual WWPN and initiator port. This allows the second storage subsystem 100u to send an FDISC message to the SAN 200f in order to get a new N_Port ID for the virtual WWPN (WWPN_2(V), N_Port ID_2x).

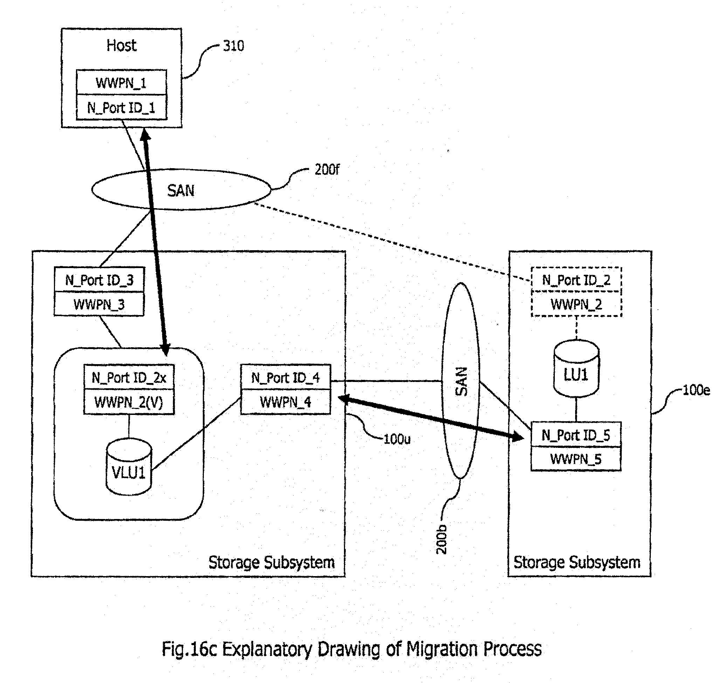

FIG. 16c shows the final status of the migration process. The virtual WWPN in the second storage subsystem 100u is registered into the SNS database of SAN 200f. This allows the SAN 200f to send an RSCN to the host computer 310. The host computer 310 sends a LOGO to logout from the first storage subsystem 100e after I/O completion. Next, the host computer 310 gets the current information of the SNS database, and the SNS database provides the new N_Port ID for the WWPN_2 on the second storage subsystem 100u (WWPN_2(V), N_Port ID_2x). This mechanism allows the host computer 310 to switch I/O from the old storage subsystem 100e to the new storage subsystem 100u. In order to identify the new N_Port ID, this system will act as follows:
(1) The SNS database has two N_Port IDs for WWPN_2. In this case, the host computer 310 will choose the newer N_Port ID.
(2) The SNS database has two N_Port IDs for WWPN_2. When the first RSCN is sent, the host computer 310 completes its I/O. After that, the host computer 310 waits for another RSCN which will be sent when the first storage subsystem 100e disables its WWPN_2.
(3) The SNS database only holds one N_Port ID for WWPN_2. It chooses the newer one.

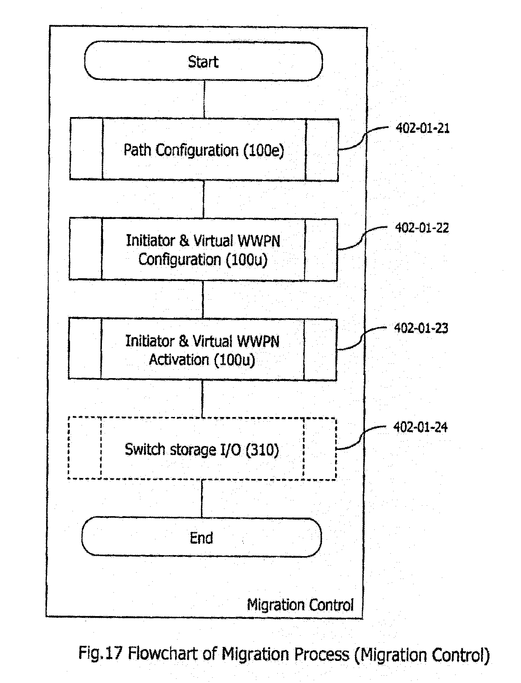

FIGS. 17-19 show examples of the process flow of the migration process executed by the management server 400, the storage subsystems 100e, 100u, and the host computer 310, for instance.

In FIG. 17, migration control is performed by path configuration in the first storage subsystem 100e (402-01-21), initiator and Virtual WWPN configuration in the second storage subsystem 100u (402-01-22), initiator and virtual WWPN activation in the second storage subsystem 100u (402-01-23), and switching the storage I/O of the host computer 310 (402-01-24).

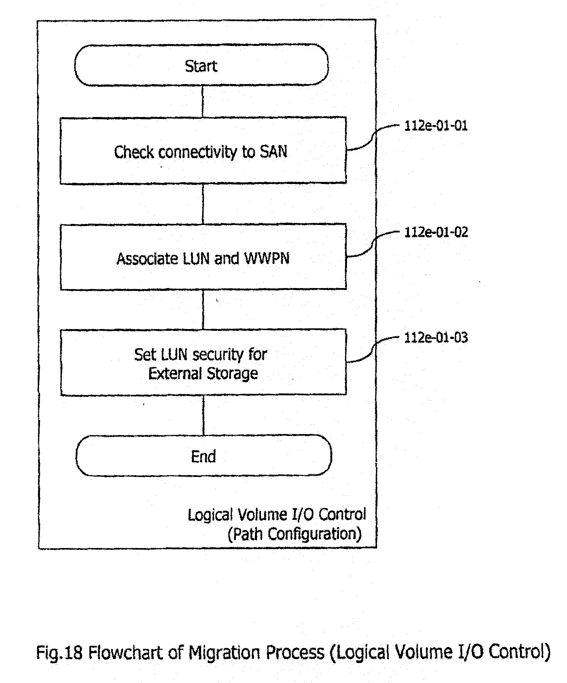

In FIG. 18, logical volume I/O control of the migration process involves checking the connectivity to the SAN by the second storage subsystem 100u (112e-01-01), associating the virtual WWPN of the virtual LU of the second storage subsystem 100u with the LU of the external storage subsystem 100e (112e-01-02), and setting the LUN security for the external storage 100a (112e-01-03).

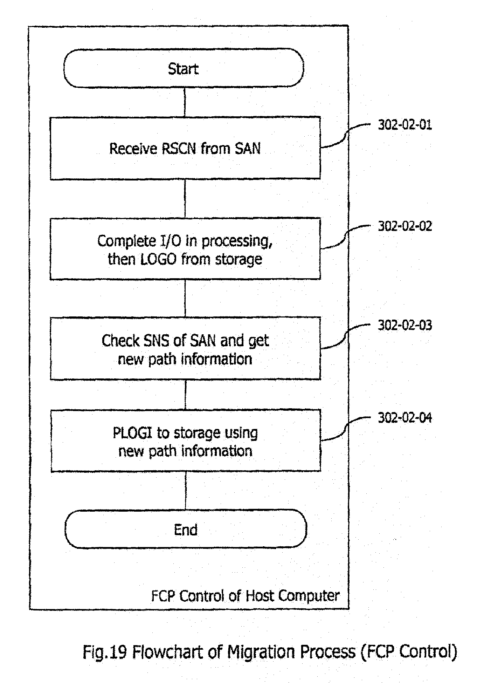

In FIG. 19, FCP control for the migration process involves receiving RSCN from the SAN by the host computer 310 (302-02-01), completing I/O in processing and then LOGO from the first storage subsystem 100e by the host computer 310 (302-02-02), checking the SNS of the SAN and getting new path information for the second storage subsystem 100u (302-02-03), and performing PLOGI to the second storage subsystem 100u using the new path information (302-02-04).

This embodiment may have an alternative set of statuses similar to FIGS. 9d and 9e described above. The second storage subsystem 100u defines the same virtual WWPN as the host computer 310 in its initiator port (WWPN_1 (V)). This allows the first storage subsystem 100e not to reconfigure the LUN masking. After adoption of the second storage subsystem 100u, the data of LU1 in the first storage subsystem 100e can be migrated to LU1 of the second storage subsystem 100u. This allows the first storage subsystem 100e to be taken away. This embodiment of the invention is not limited to storage subsystem migration only but can also be used for port migration (e.g., migrating I/O from port-A to port-B on a storage subsystem).

5. Migration Using NPIV and RSCN, Multiple Paths

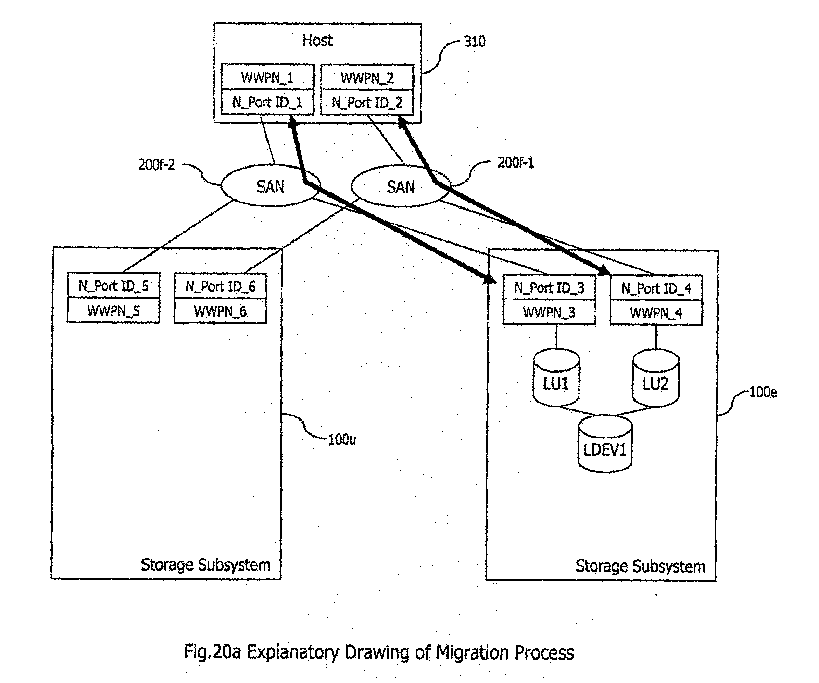

FIGS. 20a-20d illustrate an example of the migration process using SPIV and RSCN with multiple I/O paths between the host computer 310 and the storage subsystems 100e, 100u.

FIG. 20a shows the first status of the migration process. The host computer 310 has multiple I/O paths to the first storage subsystem 100e via the SAN 200f-1 and SAN 200f-2 (this example shows path-A and path-B). The host computer 310 has WWPN_1, N_Port ID_1 connected to the SAN 200f-2, and WWPN_2, N_Port ID_2 connected to the SAN 200f-1. The first storage subsystem 100e has WWPN_3, N_Port ID_3 for LU1 connected to the SAN 200f-2. and WWPN_4, N_Port ID_4 for LU2 connected to the SAN 200f-1. The second storage subsystem 100u has WWPN_5, N_Port ID_5 connected to the SAN 200f-2, and WWPN_6, N_Port ID_6 connected to the SAN 200f-1.

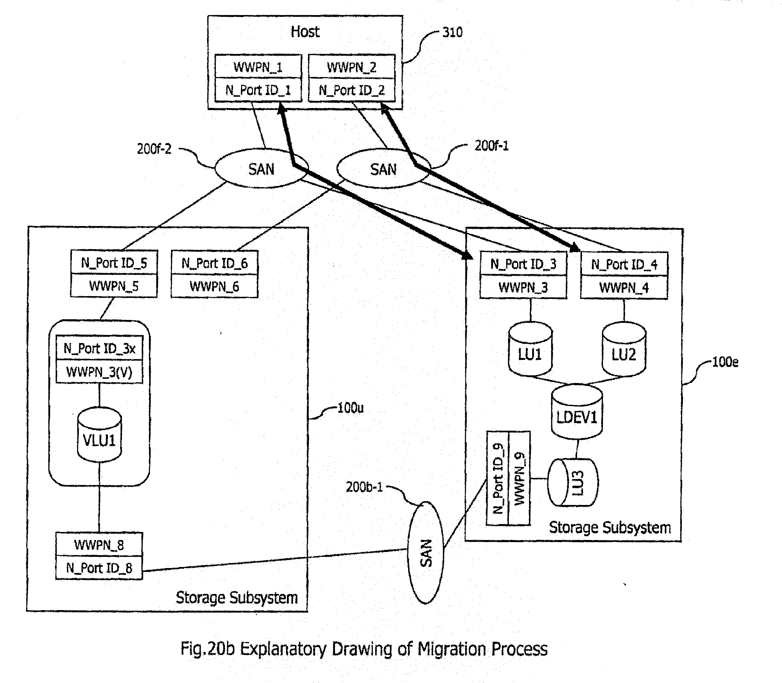

FIG. 20b shows the second status of the migration process.
The second storage subsystem 100u defines a virtual WWPN and an initiator for path-A. For WWPN_5, the second storage subsystem 100u has WWPN_3(V) for VLU1 with an initiator WWPN_8, N_Port ID_8 which is connected to the SAN 200b-1. The first storage subsystem 100e defines WWPN_9, N_Port ID_9 which is connected to LU3 and to the SAN 2006-1.

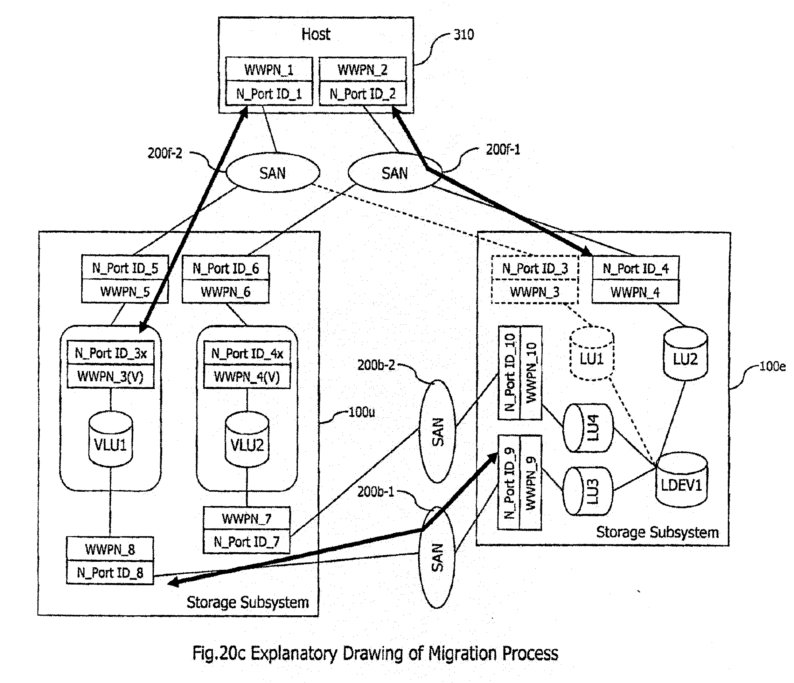

FIG. 20c shows the third status of the migration process. The host computer 310 switches I/O paths of path-A by RSCN (from a path via the SAN 200f-2 to WWPN_3 in the first storage subsystem 100e to a path via the SAN 200f-2 to WWPN_3(V) in the second storage subsystem 100u). The second storage subsystem 100u activates its virtual WWPN_3(V) and connects to WWPN_9, N_Port ID_9 of the first storage subsystem 100e by the storage virtualization function via the SAN 200b-1. This allows the second storage subsystem 100u to send an FDISC message to the SAN 200f-2 in order to get a new N_Port ID for the virtual WWPN (WWPN_3(V), N_Port ID_3x). In addition, the second storage subsystem 100u defines a virtual WWPN and an initiator for path-B. For WWPN_6, the second storage subsystem 100u has WWPN_4(V) for VLU2 with an initiator WWPN_7, N_Port ID_7 which is connected to the SAN 200b-2. The first storage subsystem 100e defines WWPN_10, N_Port ID_10 which is connected to LU4 and to the SAN 2006-2.

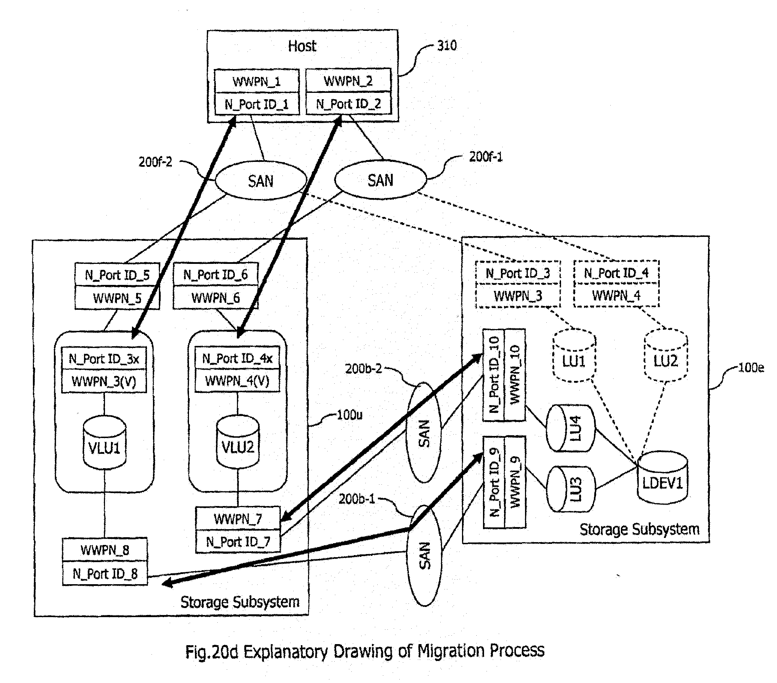

FIG. 20d shows the final status of the migration process. The host computer 310 switches I/O paths of path-B by RSCN (from a path via the SAN 200f-1 to WWPN_4 in the first storage subsystem 100e to a path via the SAN 200f-1 to WWPN_4(V) in the second storage subsystem 100u). The second storage subsystem 100u activates its virtual WWPN_4(V) and connects to WWPN_10, N_Port ID_10 of the first storage subsystem 100e by the storage virtualization function via the SAN 200b-2. This allows the second storage subsystem 100u to send an FDISC message to the SAN 200f-1 in order to get a new N_Port ID for the virtual WWPN (WWPN_4(V), N_Port ID_4x). As a result, the host computer 310 has multiple I/O paths using the same WWPNs, which are now owned by the second storage subsystem 100u.

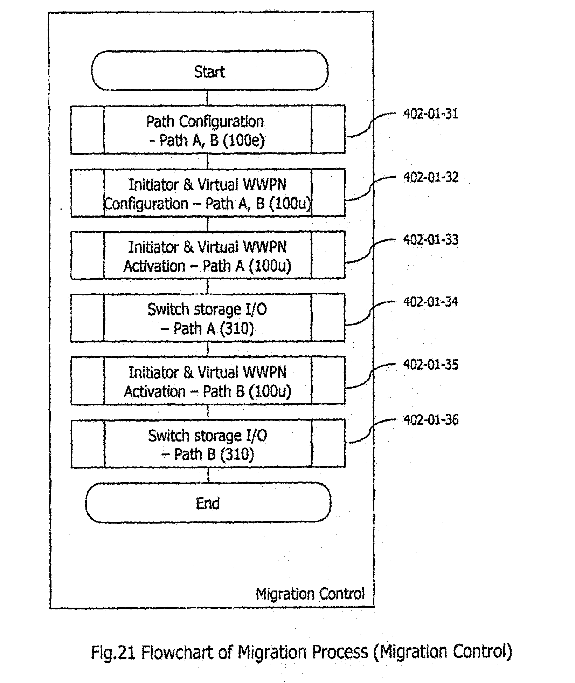

FIG. 21 shows an example of the process flow of the migration process using NPIV and RSCN with multiple I/O paths. The process involves path configuration In the first storage subsystem 100e for path-A and path-B (402-01-31), initiator and virtual WWPN configuration in the second storage subsystem 100u for path-A and path-B (402-01-32), initiator and virtual WWPN activation in the second storage subsystem 100u for path-A (402-01-33), switching the storage I/O of the host computer 310 for path-A (402-01-34), initiator and virtual WWPN activation in the second storage subsystem 100u for path-B (402-01-35), and switching the storage I/O of the host computer 310 for path-B (402-01-36).

6. Migration Using NPIV and Explicit I/O Suspension in Storage Virtualization Environment

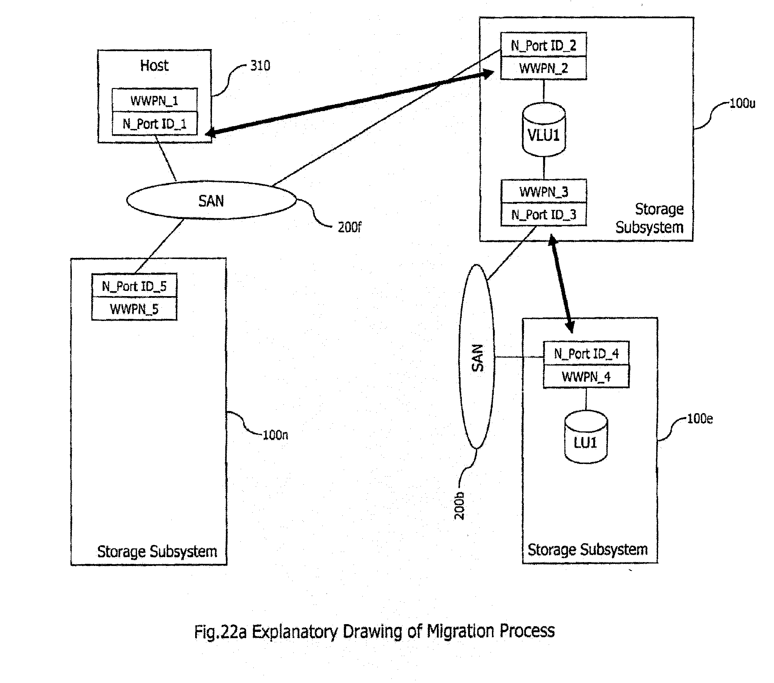

FIGS. 22a-e illustrate an example of the migration process using NPIV and explicit I/O suspension in the storage virtualization environment. In this case, the second storage subsystem 100u connects to the host computer 310 and the first storage subsystem 100e. in order to replace the second storage subsystem 100u with a third storage subsystem 100n, this embodiment applies NPIV to the storage subsystem for migration without re-configuration of the I/O path.

FIG. 22a shows the first status of the migration process. The host computer 310 connects to the second storage subsystem 100u using Fibre Channel via the SAN 200f, and the second storage subsystem 100u connects to the first storage subsystem 100e to provide LU1 to the host computer 310 using the storage virtualization function. The host computer 310 has WWPN_1, N_Port ID_1 connected to the SAN 200f. The second storage subsystem has WWPN_2, N_Port ID_2 which is connected to VLU1 and to the SAN 200f. The second storage subsystem further has WWPN_3, N_Port ID_3 which is connected to VLU1 and to the SAN 200b. The first storage subsystem has WWPN_4, N_Port ID_4 which is connected to LU1 and to the SAN 200b. The third storage subsystem has WWPN_5, N_Port ID_5 connected to the SAN 200f.

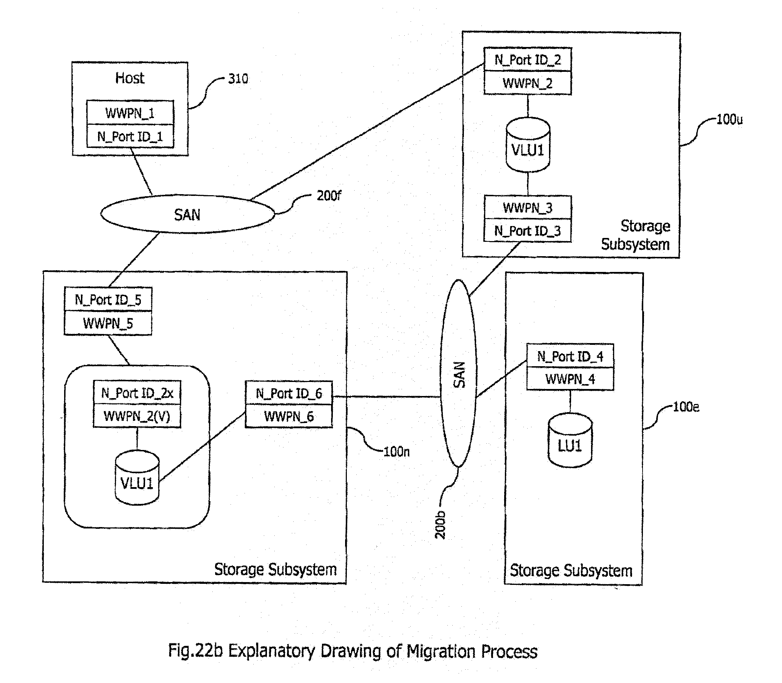

FIG. 22b shows the second status of the migration process.
The third storage subsystem 100n defines a virtual WWPN for VLU1 (WWPN_2(V)) which is the same as the (physical) WWPN of the second storage subsystem 100u (WWPN_2(V)). The third storage subsystem 100n further defines an initiator port (WWPN_6, N_Port ID_6) to connect to LU1 on the first storage subsystem 100e using the storage virtualization function via the SAN 200b. Next, the host computer 310 suspends I/O with the first storage subsystem 100e. The third storage subsystem 100n activates the virtual WWPN and initiator port. This allows the third storage subsystem 100n to send an FDISC message to the SAN 200f in order to get a new N_Port ID for the virtual WWPN (WWPN_2(V), N_Port ID_2x).

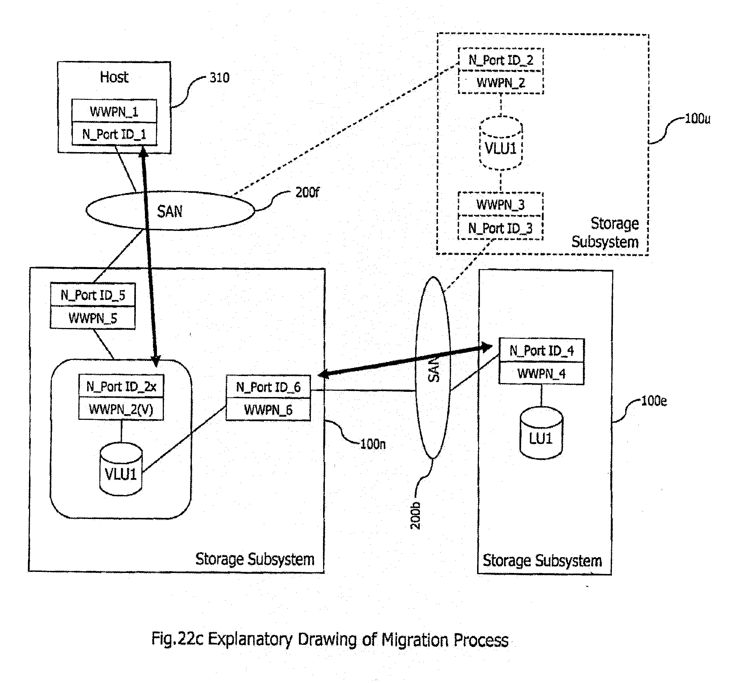

FIG. 22c shows the final status of the migration process. The second storage subsystem 100u disables WWPN_2 and updates the SNS database of the SAN 200f (WWPN_2 of the second storage systems 100u will be deleted). Next, the host computer 310 resumes I/O using the same WWPN as before (WWPN_2). This time WWPN_2 is owned by the third storage subsystem 100n. This process allows the host computer 310 to switch I/O from the old storage subsystem 100u to the new storage subsystem 100n.

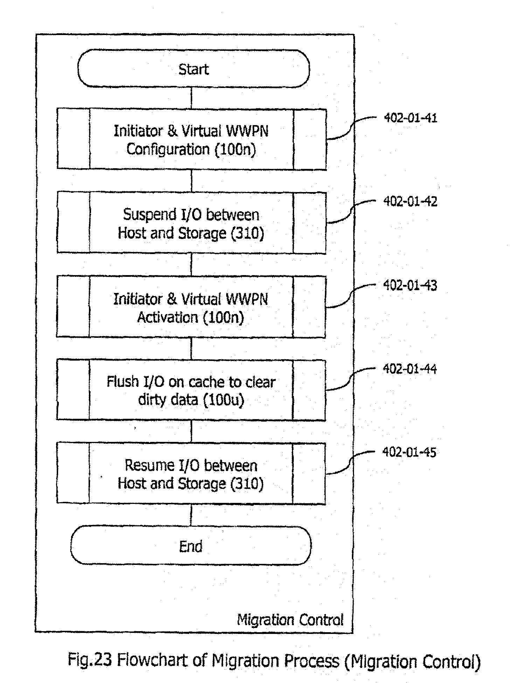

FIG. 23 shows an example of the process flow of the migration process executed by the management server 400, the storage subsystems 100e, 100u, 100n, and the host computer 310, for instance. In FIG. 23, migration control is performed by initiator and virtual WWPN configuration in the third storage subsystem 100n (402-01-41), suspending I/O between the host computer 310 and the first storage subsystem 100e (402-01-42) in the storage virtualization environment, initiator and virtual WWPN activation in the third storage subsystem 100n (402-01-43), flushing I/O on cache to clear dirty data in the second storage subsystem 100u (402-01-44), and resuming I/O between the host computer 310 and the first storage subsystem 100e in the storage virtualization environment where the third storage subsystem 100n replaces the second storage subsystem 100u (402-01-45).

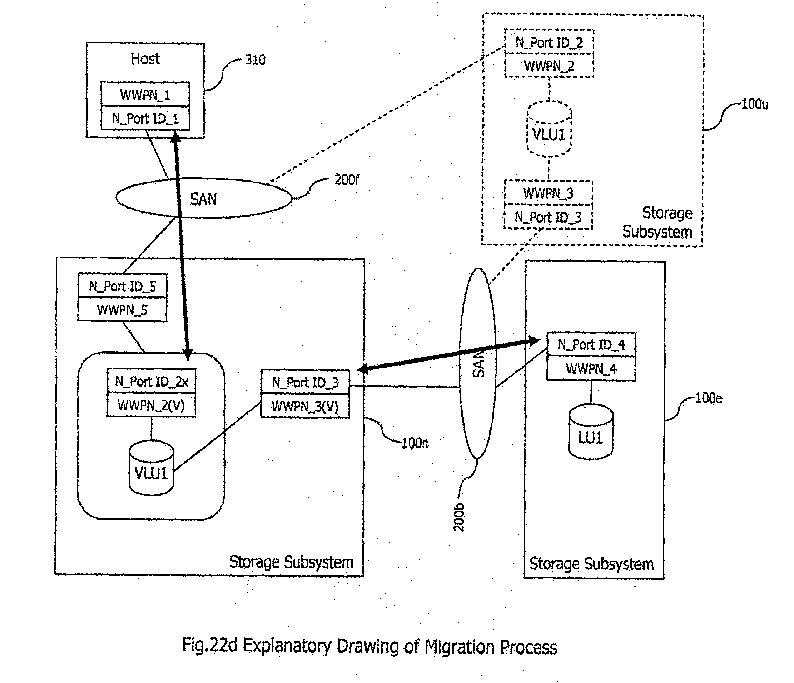

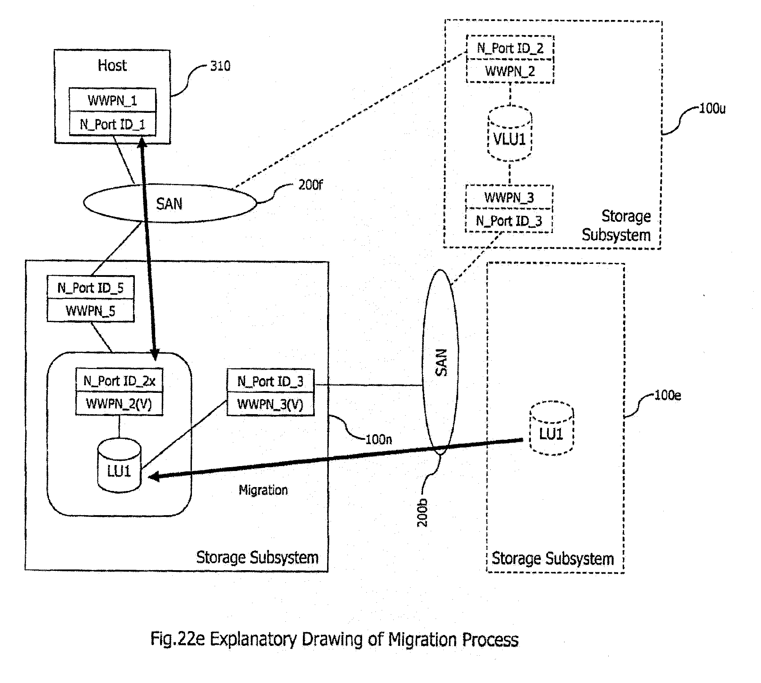

FIGS. 22d and 22e show another set of statuses of the migration process. In FIG. 22d, the third storage subsystem 100u defines the same virtual WWPN as the second storage subsystem 100u in its initiator port (WWPN_3(V)). This allows the first storage subsystem 100e not to reconfigure the LUN masking, as compared to the status of FIG. 22c. In FIG. 22e, after adoption of the third storage subsystem 100n, the data of LU1 in the first storage subsystem 100e can be migrated to LU1 of the third storage subsystem 100n. This allows the first storage subsystem 100e to be taken away.

This embodiment of the invention is not limited to storage subsystem migration only but can also be used for port migration (e.g., migrating I/O from port-A to port-B on a storage subsystems).

7. Migration Using NPIV and Explicit I/O Suspension in Storage Virtualization Environment, Multiple Paths

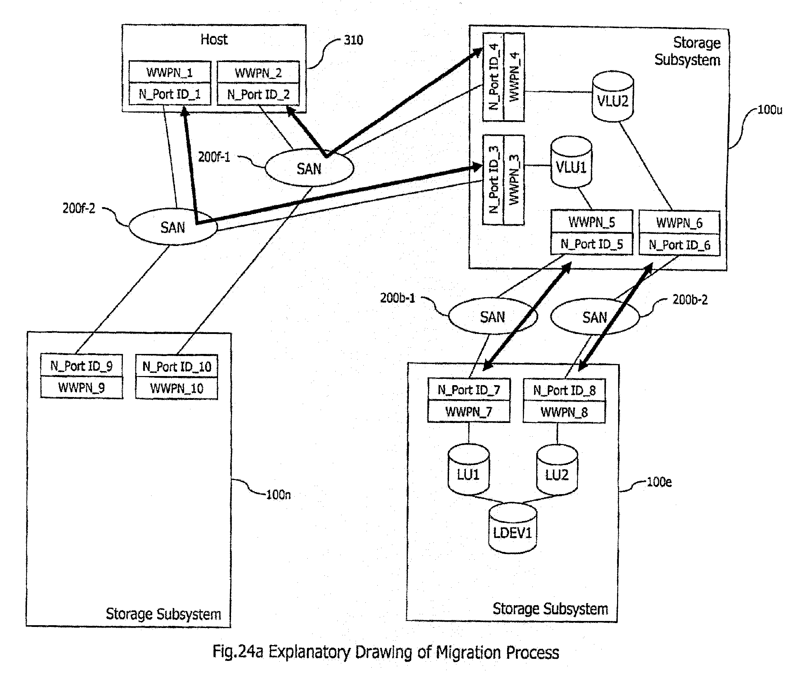

FIGS. 24a-24c illustrate an example of the migration process using NPIV and explicit I/O suspension with multiple I/O paths between the host computer 310 and the storage subsystems 100e, 100u, 100n in the storage virtualization environment.

FIG. 24a shows the first status of the migration process. The host computer 310 has multiple I/O paths to the second storage subsystem 100u via the SAN 200f-1 and SAN 200f-2 (this example shows path-A and path-B), and the second storage subsystem 100u connects to the first storage subsystem 100e using the storage virtualization function. The host computer 310 has WWPN_1, N_Port ID_1 connected to the SAN 200f-2, and WWPN_2, N_Port ID_2 connected to the SAN 200f-1. The second storage subsystem 100u has WWPN_3, N_Port ID_3 which is connected to VLU1 and to the SAN 200f-2, and WWPN_4, N_Port ID_4 which is connected to VLU2 and to the SAN 200f-1. The second storage subsystem 100u further has WWPN_5, N_Port ID_5 which is connected to VLU1 and to the SAN 200b-1, and WWPN_6, N_Port ID_6 which is connected to VLU2 and to the SAN 200b-2. The first storage subsystem 100e has WWPN_7, N_Port ID_7 which is connected to LU1 and to the SAN 200b-1, and WWPN_8, N_Port ID_8 which is connected to LU2 and to the SAN 200b-2. The third storage subsystem 100n has WWPN_9, N_Port ID_9 connected to the SAN 200f-2 and WWPN_10, N_Port ID_10 connected to the SAN 200f-1.

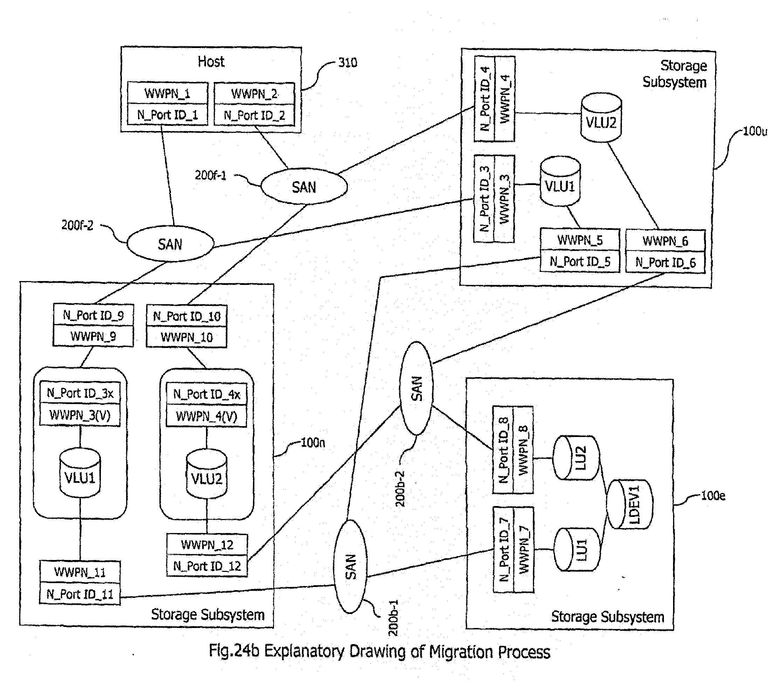

FIG. 24b shows the second status of the migration process. The third storage subsystem 100n defines multiple virtual WWPN and initiators for the multiple paths. The third storage subsystem 100n has WWPN_3(V), N_Port ID_3x for VLU1 with an initiator WWPN_11, N_Port ID_11 which is connected to the SAN 200b-1, and has WWPN_4(V), N_port ID_4x for VLU2 with an initiator WWPN_12, N_Port ID_12 which is connected to the SAN 200b-2. The host computer 310 suspends the I/O paths (path-A and path-B) with the first storage subsystem 100e In the storage virtualization environment.

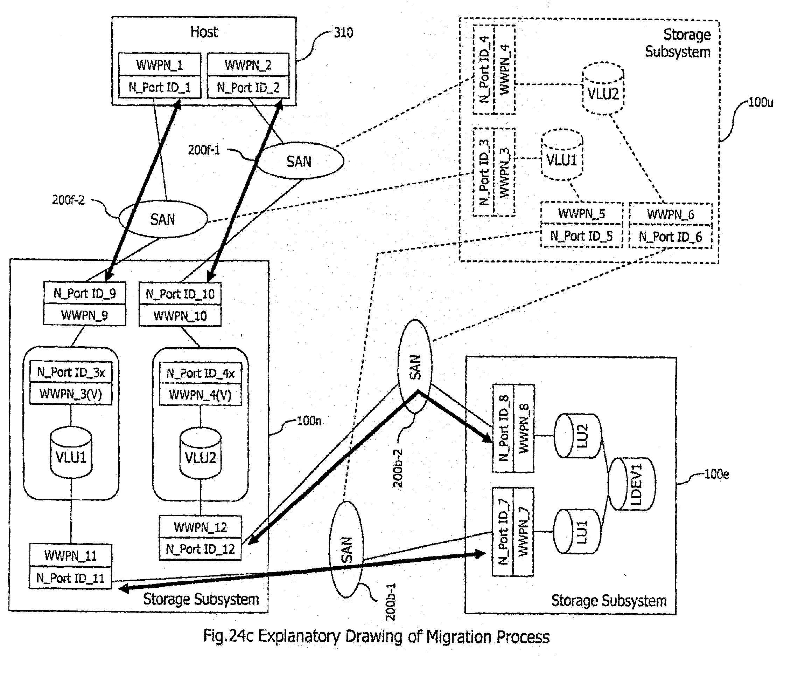

FIG. 24c shows the final status of the migration process. The third storage subsystem 100n activates its virtual WWPNs and connects to the first storage subsystem 100e by the storage virtualization function via the SAN 200b-1 and SAN 200b-2. Next, the host computer 310 resumes multiple I/O paths in the storage virtualization environment using the same WWPNs, which are now owned by the third storage subsystem 100n.

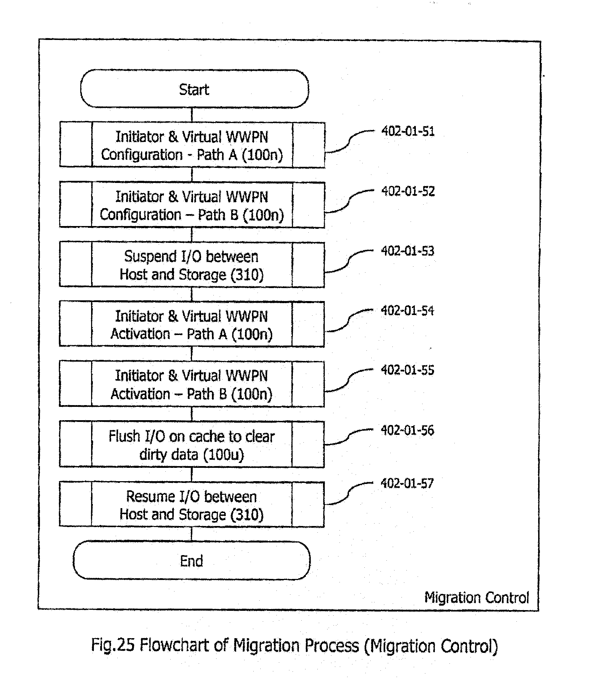

FIG. 25 shows an example of the process flow of the migration process using NPIV and explicit I/O suspension in the storage virtualization environment with multiple I/O paths. The process involves initiator and virtual WWPN configuration in the third storage subsystem 100n for path A (402-01-51) and for path B (402-01-52), suspending I/O between the host computer 310 and the first storage subsystem 100e in the storage virtualization environment (402-01-53), initiator and virtual WWPN activation in the third storage subsystem 100n for path A (402-01-54) and for path B (402-01-55). flushing the I/O on cache to clear dirty data in the second storage subsystem 100u (402-01-56), and resuming I/O between the host computer 310 and the first storage subsystem 100e in the storage virtualization environment where the third storage subsystem 100n replaces the second storage subsystem 100u (402-01-57).

8. Migration Using NPIV and RSCN in Storage Virtualization Environment

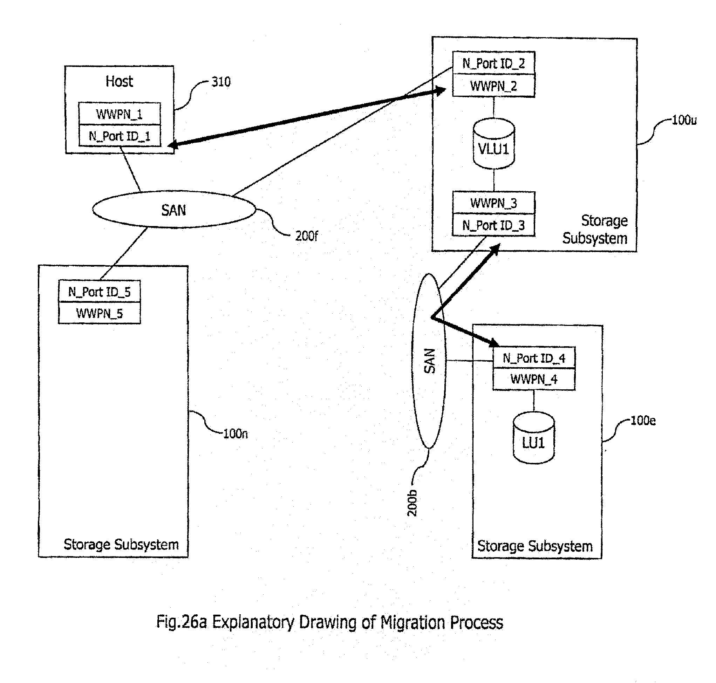

FIGS. 26a-26c illustrate an example of the migration process using NPIV and RSCN in the storage virtualization environment. In this case, the second storage subsystem 100u connects to the host computer 310 and the first storage subsystem 100e. In order to replace the second storage subsystem 100u by the third storage subsystem 100n, this embodiment applies RSCN and NPIV to the storage subsystem for migration in the storage virtualization environment without re-configuration of the I/O path.

FIG. 26a shows the first status of the migration process. The host computer 310 connects to the second storage subsystem 100u using Fibre Channel via the SAN 200f, and the second storage subsystem 100u connects to the first storage subsystem 100e to provide LU1 to the host computer 310 using the storage virtualization function. The host computer 310 has WWPN_1, N_Port ID_1 connected to the SAN 200f. The second storage subsystem 100u has WWPN_2, N_Port ID_2 connected to the SAN 200f. The second storage subsystem 100u further has WWPN_3, N_Port ID_3 which is connected to VLU1 and to the SAN 200b. The first storage subsystem 100e has WWPN_4, N_Port ID_4 connected to the SAN 200b. The third storage subsystem 100n has WWPN_5, N_Port ID_5 connected to the SAN 200f.

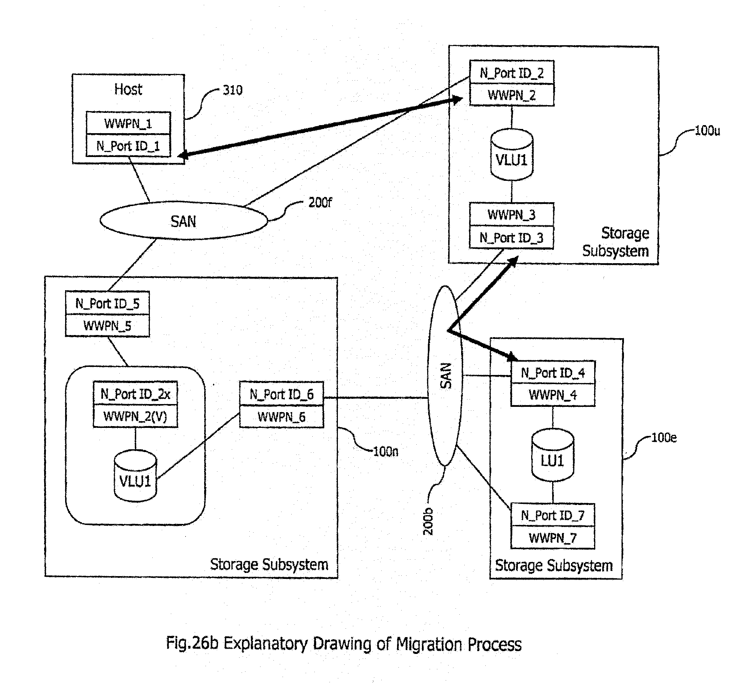

FIG. 26b shows the second status of the migration process. The third storage subsystem 100n defines a virtual WWPN which is the same as the (physical) WWPN of the second storage subsystem 100u (WWPN_2(V)). It further defines an initiator port (WWPN_6, N_Port ID_6) to connect to LU1 on the first storage subsystem 100e using the storage virtualization function via the SAN 200b. To do so, the first storage subsystem 100e defines another WWPN (WWPN_7) which is connected to LU1. Next, the third storage subsystem 100n activates the virtual WWPN and initiator port. This allows the third storage subsystem 100n to send an FDISC message to the SAN 200f in order to get a new N_Port ID for the virtual WWPN (WWPN_2(V), N_Port ID_2x).

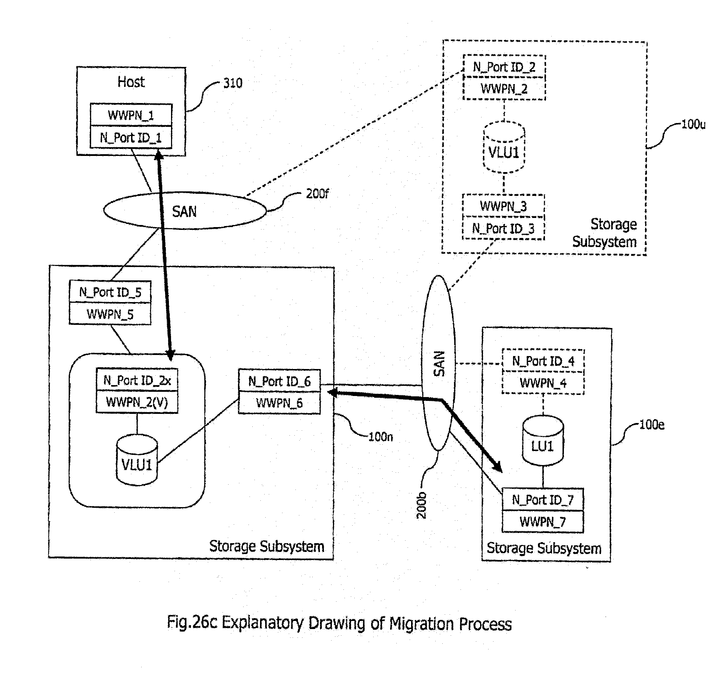

FIG. 26c shows the final status of the migration process. The virtual WWPN in the third storage subsystem 100n is registered into the SNS database of SAN 200f. This allows the SAN 200f to send an RSCN to the host computer 310. The host computer 310 sends a LOGO to logout from the second storage subsystem 100u after I/O completion. Next, the host computer 310 gets the current information of the SNS database, and the SNS database provides the new N_Port ID for the WWPN_2 on the third storage subsystem 100n (WWPN_2(V), N_Port ID_2x). This mechanism allows the host computer 310 to switch I/O from the old storage subsystem 100u to the new storage subsystem 100n. In order to identify the new N_Port ID, this system will act as follows:
(1) The SNS database has two N_Port IDs for WWPN_2. In this case, the host computer 310 will choose the newer N_Port ID.
(2) The SNS database has two N_Port IDs for WWPN_2. When the first RSCN is sent, the host computer 310 completes its I/O, After that, the host computer 310 waits for another RSCN which will be sent when the second storage subsystem 100u disables its WWPN_2.
(3) The SNS database only holds one N_Port ID for WWPN_2. It chooses the newer one.

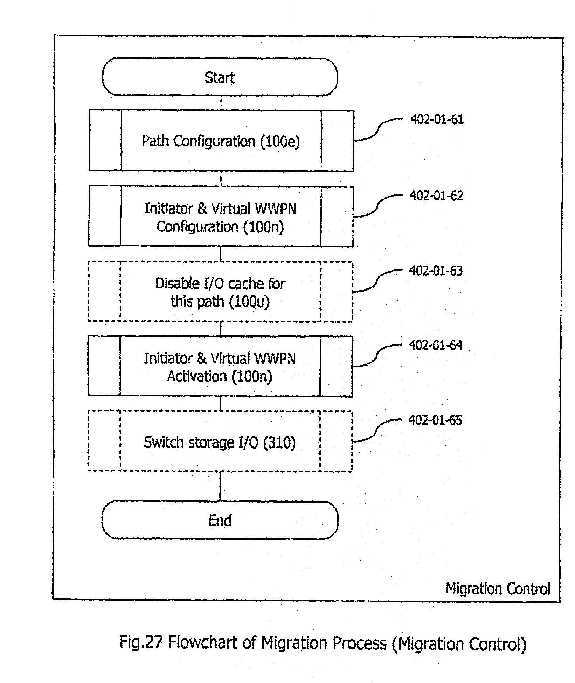

FIG. 27 shows an example of the process flow of the migration process executed by the management server 400, the storage subsystems 100e, 100u, and the host computer 310, for instance. Migration control is performed by path configuration in the first storage subsystem 100e (402-01-61), initiator and virtual WWPN configuration in the third storage subsystem 100n (402-01-62), disabling I/O cache for this path in the second storage subsystem 100u (402-01-63), initiator and virtual WWPN activation in the third storage subsystem 100n (402-01-64), and switching the storage I/O of the host computer 310 (402-01-65).

This embodiment may have an alternative set of statuses similar to FIGS. 9d and 9e described above. The third storage subsystem 100n defines the same virtual WWPN as the first storage subsystem 100e in its initiator port (WWPN_2(V)). This allows the first storage subsystem 100e not to reconfigure the LUN masking. After adoption of the third storage subsystem 100n, the data of LU1 in the first storage subsystem 100e can be migrated to LU1 of the third storage subsystem 100n. This allows the first storage subsystem 100e to be taken away. This embodiment of the invention is not limited to storage subsystem migration only but can also be used for port migration (e.g., migrating I/O from port-A to port-B on a storage subsystem).

9. Migration Using NPIV and RSCN in Storage Virtualization Environment, Multiple Paths

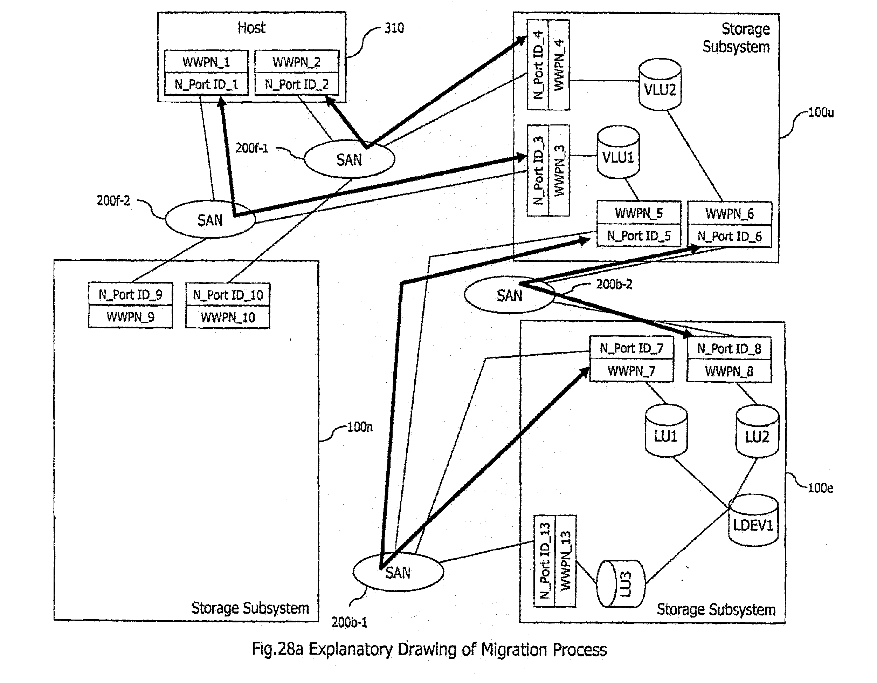

FIGS. 28a-28d illustrate an example of the migration process using NPIV and RSCN with multiple I/O paths between the host computer 310 and the storage subsystems 100e, 100u, 100n in the storage virtualization environment.

FIG. 28a shows the first status of the migration process. The host computer 310 has multiple I/O paths to the second storage subsystem 100u via the SAN 200f-1 and SAN 200f-2, and the second storage subsystem 100u connects to the first storage subsystem 100e using the storage virtualization function (this example shows path-A and path-B). The host computer 310 has WWPN_1, N_Port ID_1 connected to the SAN 200f-2, and WWPN_2, N_port ID_2 connected to the SAN 200f-1. The second storage subsystem 100u has WWPN_3, N_Port ID_3 connected to VLU1 and the SAN 200f-2, and WWPN_4, N_Port ID_4 connected to VLU2 and the SAN 200f-1. The second storage subsystem 100u further has WWPN_5, N_Port ID_5 which is connected to VLU1 and to the SAN 200b-1. and WWPN_6, N_Port ID_6 which is connected to VLU2 and to the SAN 200b-2. The first storage subsystem 100e has WWPN_7, N_Port ID_7 connected to LU1 and the SAN 200b-1, and WWPN_8, N_Port ID_8 connected to LU2 and the SAN 200b-2.

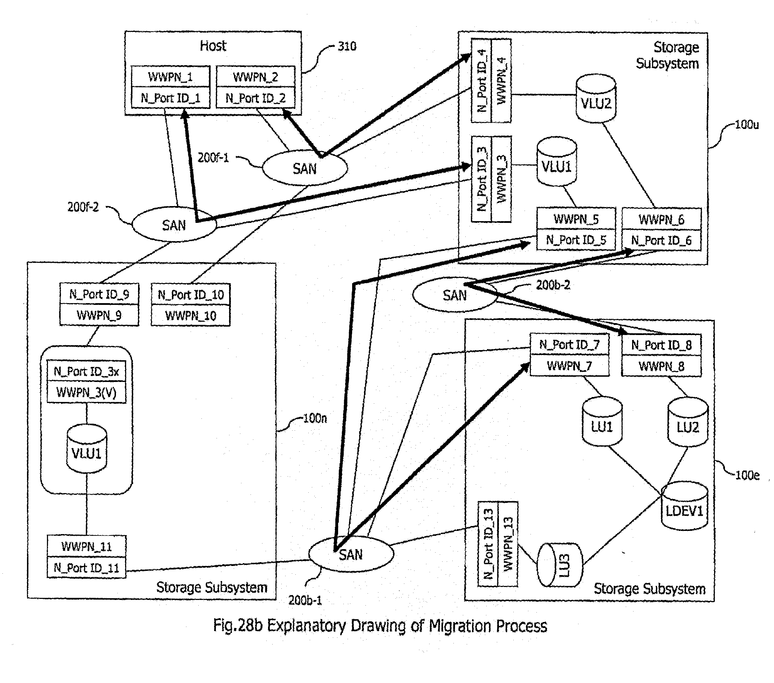

FIG. 28b shows the second status of the migration process. The third storage subsystem 100n defines a virtual WWPN and an initiator for path-A. For WWPN_9, the third storage subsystem 100n has WWPN_3(V) for VLU1 with an initiator WWPN_11, N_Port ID_11 which is connected to the SAN 200b-1. The first storage subsystem 100e defines WWPN_13, N_Port ID_13 which is connected to LU3.

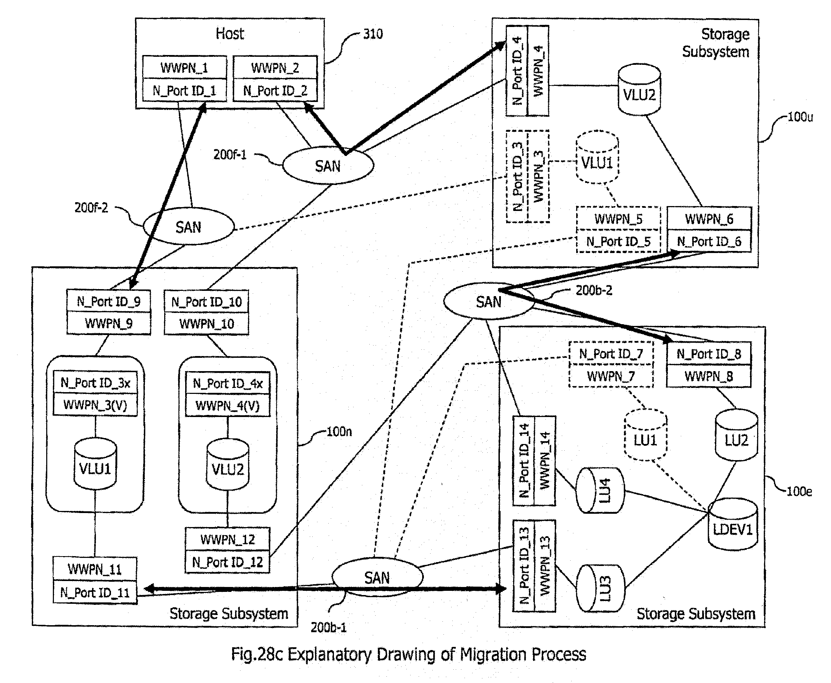

FIG. 28c shows the third status of the migration process. The host computer 310 switches I/O paths of path-A by RSCN (from a path via the SAN 200f-2 to WWPN_3 in the second storage subsystem 100u to a path via the SAN 2001-2 to WWPN_9 in the third storage subsystem 100n). The third storage subsystem 100n activates its virtual WWPN_3(V) and connects to WWPN_13, N_Port ID_13 of the first storage subsystem 100e by the storage virtualization function via the SAN 200b-1. This allows the third storage subsystem 100n to send an FDISC message to the SAN 200f-2 in order to get a new N_Port ID for the virtual WWPN (WWPN_3(V), N_Port ID_3x). In addition, the third storage subsystem 100n defines a virtual WWPN and an initiator for path-B. For WWPN_10, the third storage subsystem 100n has WWPN_4(V) for VLU2 with an initiator WWPN_12, N_Port ID_12 which is connected to the SAN 200b-2. The first storage subsystem 100e defines WWPN_14, N_Port ID_14 which is connected to LU4.

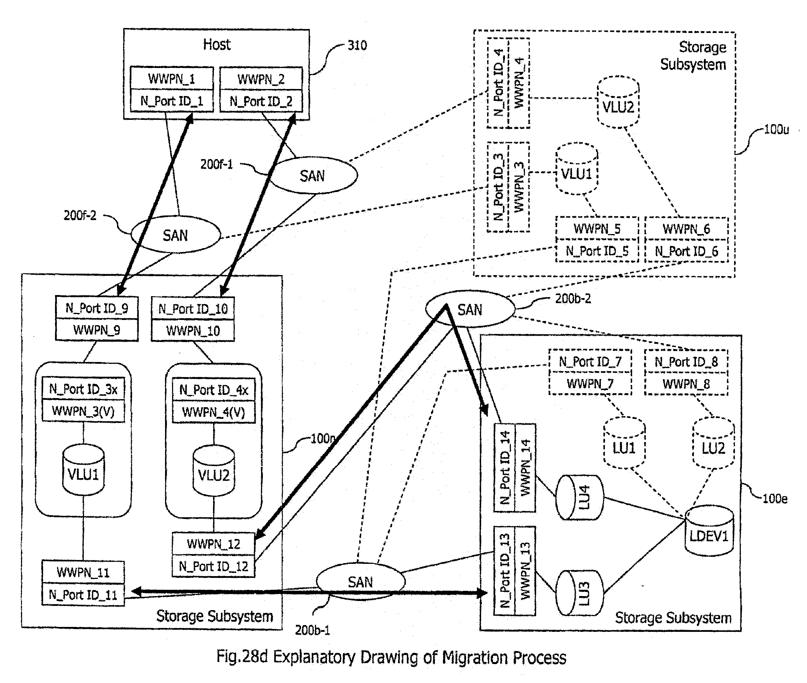

FIG. 28d shows the final status of the migration process. The host computer 310 switches I/O paths of path-B by RSCN (from a path via the SAN 200f-1 to WWPN_4 in the first storage subsystem 100e to a path via the SAN 200f-1 to WWPN_1 0(V) in the third storage subsystem 100n). The third storage subsystem 100n activates its virtual WWPN_4(V) and connects to WWPN_14, N_Port ID_14 of the first storage subsystem 100e by the storage virtualization function via the SAN 200b-2. This allows the third storage subsystem 100n to send an FDISC message to the SAN 200f-1 in order to get a new N_Port ID for the virtual WWPN (WWPN_4(V), N_Port ID_4x). As a result, the host computer 310 has multiple I/O paths in the storage virtualization environment using the same WWPNs, which are now owned by the third storage subsystem 100n.

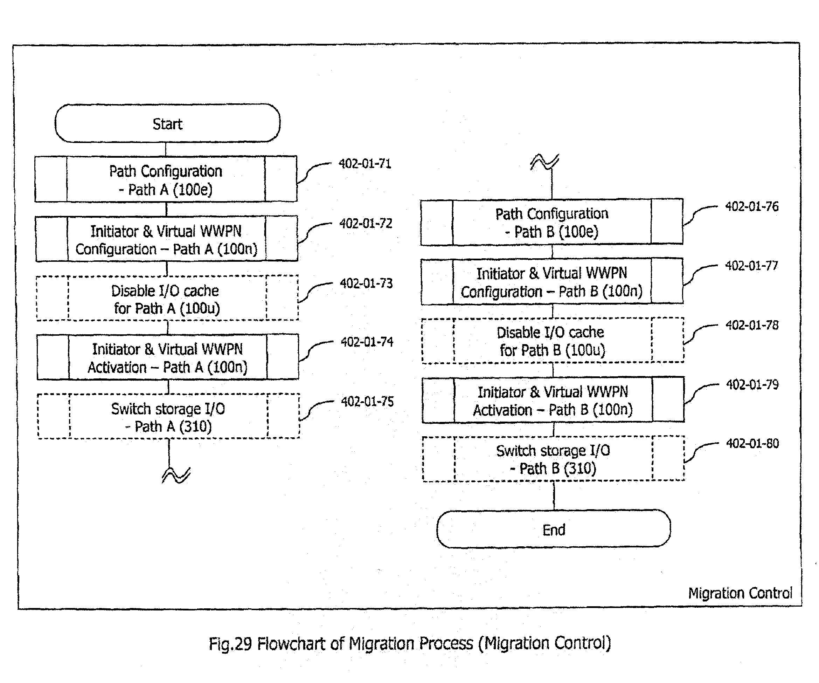

FIG. 29 shows an example of the process flow of the migration process using NPIV and RSCN with multiple I/O paths in the storage virtualization environment. The process involves path configuration in the first storage subsystem 100e for path-A (402-01-71), initiator and virtual WWPN configuration in the third storage subsystem 100n for path-A (402-01-72), disabling the I/O cache for path-A (402-01-73), initiator and virtual WWPN activation in the third storage subsystem 100n for path-A (402-01-74), switching the storage I/O of the host computer 310 for path-A (402-01-75), path configuration in the first storage subsystem 100e for path-B (402-01-76), initiator and virtual WWPN configuration in the third storage subsystem 100n for path-B (402-01-77), disabling the I/O cache for path-B (402-01-78), initiator and virtual WWPN activation in the third storage subsystem 100n for path-B (402-01-79), and switching the storage I/O of the host computer 310 for path-B (402-01-80).

The above describes various embodiments of the invention in an FC-SAN environment. The invention may be implemented in a different environment, such as the Fibre Channel over Ethernet (FCoE) environment, which allows one to send and receive FC frame over the Ethernet. The FCoE node has an Ethernet adapter that has MAC address and N_Port ID. Thus, the invention works in the FCoE environment without specific customization.

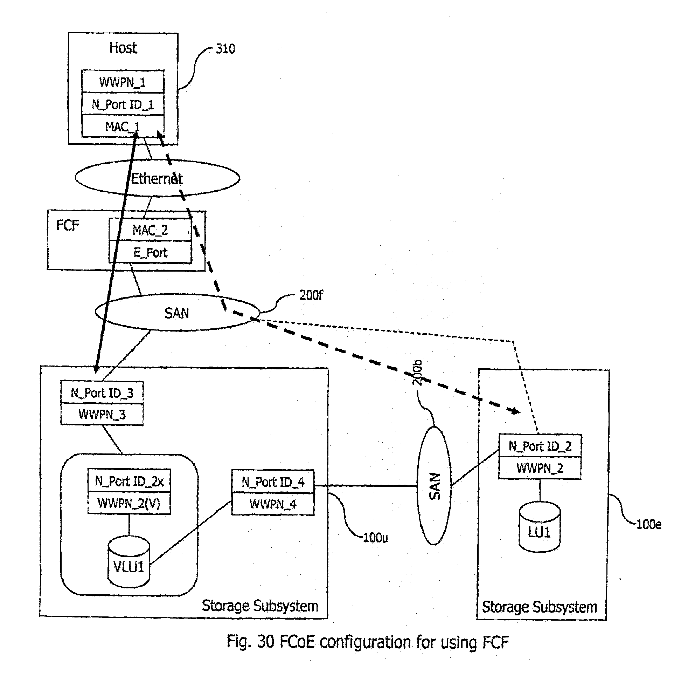

FIG. 30 Illustrates an example of the migration process using NPIV and explicit I/O suspension for FCoE using an FCoE Forwarder (FCF). As compared to FIG. 9c, FIG. 30 shows an FCF with the MAC address MAC_2 that communicates via the Ethernet with the host computer 310 which has the MAC address MAC_1. The FCF allows the FCoE node (of the host computer 310) and the FC node (of the storage subsystem) to communicate with each other. One example of an FCF is the Cisco Nexus 5000 device. The host computer 310 and the second storage subsystem 100u establish I/O connection using the WWPN and N_Port ID. The host computer 310 and the FCF use the MAC addresses to communicate with each other, while the host computer 310 and the storage subsystems can know each WWPN and N-Port ID as in tunneling technology.

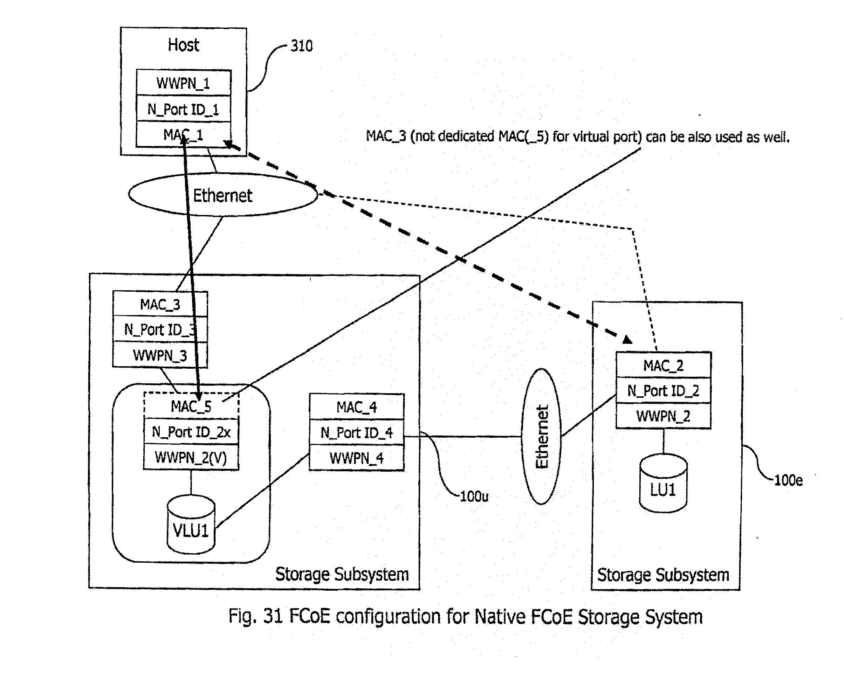

FIG. 31 illustrates an example of the migration process using NPIV and explicit I/O suspension for a native FCoE storage system. No FCF is necessary. Instead, the host computer 310 and the storage subsystems 100e, 100u use the MAC addresses to communicate with each other. The first storage system has the MAC address MAC_2. The second storage system has MAC_3 corresponding to the port N_Port ID_3, MAC_4 corresponding to the initiator port N_Port ID_4, and MAC_5 corresponding to the virtual port N_Port ID_2x. It is noted that instead of a dedicated MAC number MAC_5 for the virtual port N_Port ID_2x, communication using MAC_3 can be used for the second storage subsystem 100u.

From the foregoing, it will be apparent that the invention provides methods, apparatuses and programs stored on computer readable media for storage subsystem migration without re-configuration of the I/O path. Additionally, while specific embodiments have been illustrated and described in this specification, those of ordinary skill in the art appreciate that any arrangement that is calculated to achieve the same purpose may be substituted for the specific embodiments disclosed. This disclosure is intended to cover any and all adaptations or variations of the present invention, and it is to be understood that the terms used in the following claims should not be construed to limit the invention to the specific embodiments disclosed in the specification. Rather, the scope of the invention is to be determined entirely by the following claims, which are to be construed in accordance with the established doctrines of claim interpretation, along with the full range of equivalents to which such claims are entitled.

## Claims

1. A computer system comprising:
a first storage subsystem, a second storage subsystem, a third storage subsystem, and a computer device which are connected via a network;
wherein the first storage subsystem has a first port name for a first port through which a first volume in the first storage subsystem has I/O connection with the computer device, the first port name being a unique port name;
wherein the second storage subsystem (SS2) includes a first SS2 virtual volume which is associated with the first volume in the first storage subsystem, and a first SS2 port having a first SS2 port name for I/O connection of the first SS2 virtual volume with the computer device via the network;
wherein the third storage subsystem (SS3) defines a first SS3 virtual volume which is associated with the first volume in the first storage subsystem, and a first SS3 virtual port associated with the first SS3 virtual volume, the first SS3 virtual port having a first SS3 virtual port name that is identical to the first SS2 port name of the first SS2 virtual port in the second storage subsystem;
wherein the third storage subsystem is configured to activate the first SS3 virtual port associated with the first SS3 virtual volume to register the first SS3 virtual port to the network; and
wherein the computer device is configured, after activation of the first SS3 virtual port, to switch I/O connection for the first volume from the second storage subsystem to the third storage subsystem via the network using the first SS3 virtual port name on the third storage subsystem.

2. A computer system according to claim 1,
wherein the first storage subsystem has a second port name for a second port through which a second volume in the first storage subsystem has I/O connection with the computer device via an additional network, the second port name being another unique port name;
wherein the second storage subsystem (SS2) includes a second SS2 virtual volume which is associated with the second volume in the first storage subsystem, and a second SS2 port having a second SS2 port name for I/O connection of the second SS2 virtual volume with the computer device via the additional network;
wherein the third storage subsystem (SS3) defines a second SS3 virtual volume which is associated with the second volume in the first storage subsystem, and a second SS3 virtual port associated with the second SS3 virtual volume, the second SS3 virtual port having a second SS3 virtual port name that is identical to the second SS2 port name of the second SS2 virtual port in the second storage subsystem;
wherein the third storage subsystem is configured to activate the second SS3 virtual port associated with the second SS3 virtual volume to register the second SS3 virtual port to the additional network; and
wherein the computer device is configured, after activation of the first SS3 virtual port, to switch I/O connection for the second volume from the second storage subsystem to the third storage subsystem via the network using the second SS3 virtual port name on the third storage subsystem.

3. A computer system according to claim 1,
wherein the second storage subsystem (SS2) includes an additional first SS2 port having an additional first SS2 port name for I/O connection of the first SS2 virtual volume with the first storage subsystem;
wherein the third storage subsystem is configured to define a first SS3 initiator port to connect the first SS3 virtual volume to the first volume in the first storage subsystem, the first SS3 initiator port having a virtual port name that is identical to the additional first SS2 port name of the additional first SS2 port in the second storage subsystem.

4. A computer system according to claim 1,
wherein the computer device is configured, prior to activation of the first SS3 virtual port associated with the first SS3 virtual volume of the third storage subsystem, to suspend I/O with the first storage subsystem; and
wherein the third storage subsystem receives a first SS3 N_Port ID for the first SS3 virtual port name after activation of the first SS3 virtual port.

5. A computer system according to claim 1,
wherein the first storage subsystem has a first additional port with a first additional port name through which the first volume in the first storage subsystem has I/O connection with the first SS3 virtual volume of the third storage subsystem;
wherein, after activation of the first SS3 virtual port associated with the first SS3 virtual volume of the third storage subsystem, the computer device receives from the network an RSCN (Registered State Change Notification) and a first N_Port ID for the first SS3 virtual port name associated with the first SS3 virtual volume of the third storage subsystem, and switches I/O for the first volume from the first storage subsystem to the third storage subsystem.

6. A computer system according to claim 1, wherein the third storage subsystem executes data migration for the first volume after the computer device switches I/O connection for the first volume from the second storage subsystem to the third storage subsystem.

7. In a computer system which includes a first storage subsystem, a second storage subsystem, a third storage subsystem, and a computer device that are connected via a network; wherein the first storage subsystem has a first port name for a first port through which a first volume in the first storage subsystem has I/O connection with the computer device, the first port name being a unique port name; and wherein the second storage subsystem (SS2) includes a first SS2 virtual volume which is associated with the first volume in the first storage subsystem, and a first SS2 port having a first SS2 port name for I/O connection of the first SS2 virtual volume with the computer device via the network; a method for storage subsystem migration without reconfiguration of the I/O path, the method comprising:
defining in the third storage subsystem (SS3) a first SS3 virtual volume which is associated with the first volume in the first storage subsystem, and a first SS3 virtual port associated with the first SS3 virtual volume, the first SS3 virtual port having a first SS3 virtual port name that is identical to the first SS2 port name of the first SS2 virtual port in the second storage subsystem;
activating the first SS3 virtual port associated with the first SS3 virtual volume of the third storage subsystem to register the first SS3 virtual port to the network; and
after activation of the first SS3 virtual port, switch I/O connection of the computer device for the first volume from the second storage subsystem to the third storage subsystem via the network using the first SS3 virtual port name on the third storage subsystem.

8. A method according to claim 7,
wherein the second storage subsystem (SS2) includes an additional first SS2 port having an additional first SS2 port name for I/O connection of the first SS2 virtual volume with the first storage subsystem;
wherein the method further comprises defining in the third storage subsystem a first SS3 initiator port to connect the first SS3 virtual volume to the first volume in the first storage subsystems, the first SS3 initiator port having a virtual port name that is identical to the additional first SS2 port name of the additional first SS2 port in the second storage subsystem.

9. A method according to claim 7, further comprising:
prior to activation of the first SS3 virtual port associated with the first SS3 virtual volume of the third storage subsystem, suspending I/O of the computer device with the first storage subsystem; and
providing to the third storage subsystem a first SS3 N_Port ID for the first SS3 virtual port name after activation of the first SS3 virtual port.

10. A method according to claim 7, wherein the first storage subsystem has a first additional port with a first additional port name through which the first volume in the first storage subsystem has I/O connection with the first SS3 virtual volume of the third storage subsystem; the method further comprising:
after activation of the first SS3 virtual port associated with the first SS3 virtual volume of the third storage subsystem, providing to the computer device an RSCN (Registered State Change Notification) and a first N_Port ID for the first SS3 virtual port name associated with the first SS3 virtual volume of the third storage subsystem; and
switching I/O of the computer device for the first volume from the first storage subsystem to the third storage subsystem.
